(19) Europäisches Patentamt
European Patent Office
Office européen des brevets

(11) **EP 2 296 138 A1**

(12) **EUROPEAN PATENT APPLICATION**
published in accordance with Art. 153(4) EPC

(43) Date of publication:
**16.03.2011 Bulletin 2011/11**

(51) Int Cl.:
***G09G 3/36*** *(2006.01)*  ***G02F 1/133*** *(2006.01)*
***G09G 3/20*** *(2006.01)*

(21) Application number: **09754405.0**

(22) Date of filing: **21.05.2009**

(86) International application number:
**PCT/JP2009/002252**

(87) International publication number:
**WO 2009/144896 (03.12.2009 Gazette 2009/49)**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **27.05.2008 JP 2008138397**

(71) Applicant: **Sharp Kabushiki Kaisha Osaka-shi, Osaka 545-8522 (JP)**

(72) Inventors:
• **TOMIZAWA, Kazunari**
  **Osaka-shi,**
  **Osaka 545-8522 (JP)**

• **NAKAMURA, Kohzoh**
  **Osaka-shi,**
  **Osaka 545-8522 (JP)**
• **UEKI, Shun**
  **Osaka-shi,**
  **Osaka 545-8522 (JP)**
• **YOSHIDA, Yuichi**
  **Osaka-shi,**
  **Osaka 545-8522 (JP)**

(74) Representative: **Goddar, Heinz J. et al**
  **Forrester & Boehmert**
  **Pettenkoferstrasse 20-22**
  **80336 München (DE)**

(54) **SIGNAL CONVERSION CIRCUIT, AND MULTIPLE PRIMARY COLOR LIQUID CRYSTAL DISPLAY DEVICE HAVING THE CIRCUIT**

(57)    There is provided a signal conversion circuit which is suitably used in a multiprimary liquid crystal display device (especially a multiprimary liquid crystal display device which performs display in a vertical alignment mode), and a multiprimary liquid crystal display device having such a signal conversion circuit.

A signal conversion circuit according to the present invention is for use in a multiprimary liquid crystal display device which performs display in a vertical alignment mode, and converts an input video signal to a multiprimary signal corresponding to four or more primary colors. When generating a multiprimary signal for displaying dark skin, the signal conversion circuit according to the present invention applies a conversion to the video signal so that a color difference $\Delta u'v' = ((u'-u60')^2 + (v'-v_{60}')^2)$ is 0.03 or less, the color difference $\Delta u'v'$ being defined by CIE1976 chromaticity coordinates (u', v') representing a chromaticity when the pixel is viewed from the frontal direction and CIE1976 chromaticity coordinates ($u_{60}'$, $v_{60}'$) representing a chromaticity when the pixel is viewed from a 60° oblique direction.

*FIG.1*

EP 2 296 138 A1

**Description**

## TECHNICAL FIELD

The present invention relates to a liquid crystal display device, and more particularly to a multiprimary liquid crystal display device which performs display by using four or more primary colors. The present invention also relates to a signal conversion circuit for use in such a liquid crystal display device.

## BACKGROUND ART

Currently, various display devices are used in a variety of applications, including liquid crystal display devices. In commonly-used display devices, each pixel is composed of three subpixels for displaying three primaries of light, i.e., red, green and blue, whereby multicolor display is achieved.

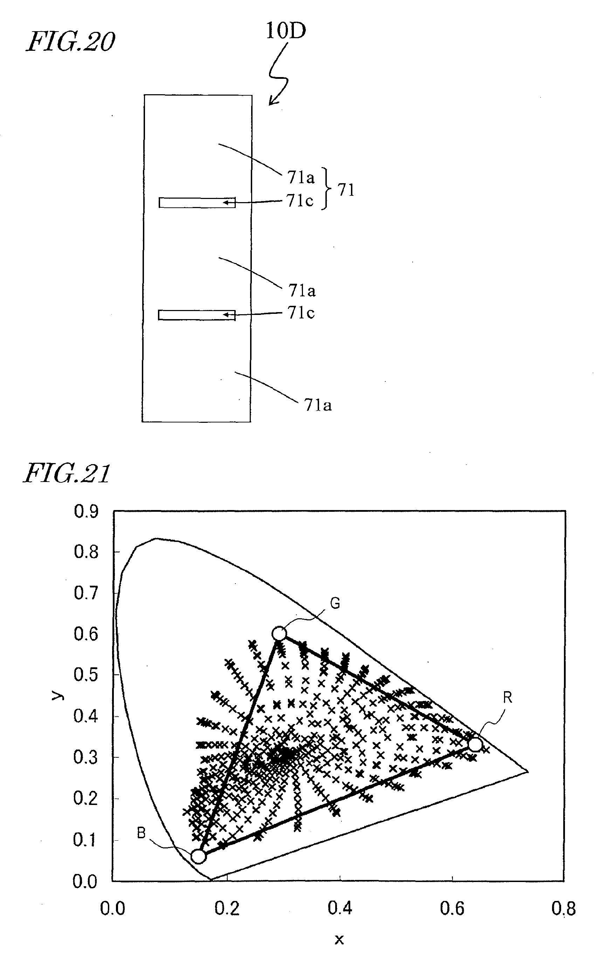

However, conventional display devices have a problem in that they can only display colors in a narrow range (referred to as a "color gamut"). FIG. **21** shows a color gamut of a conventional display device which performs display by using three primaries. FIG. **21** is an xy chromaticity diagram in an XYZ color system, where a color gamut is shown by a triangle whose apices are at three points corresponding to the three primaries of red, green and blue. Also shown in the figure are plotted colors (represented by " ×" symbols) of various objects existing in nature, as taught by Pointer (see Non-Patent Document 1). As can be seen from FIG. **21,** there are some object colors which do not fall within the color gamut. Thus, display devices which perform display by using three primaries are unable to display some object colors.

Therefore, in order to broaden the color gamut of a display device, there has been proposed a technique which increases the number of primary colors to be used for displaying to four or more.

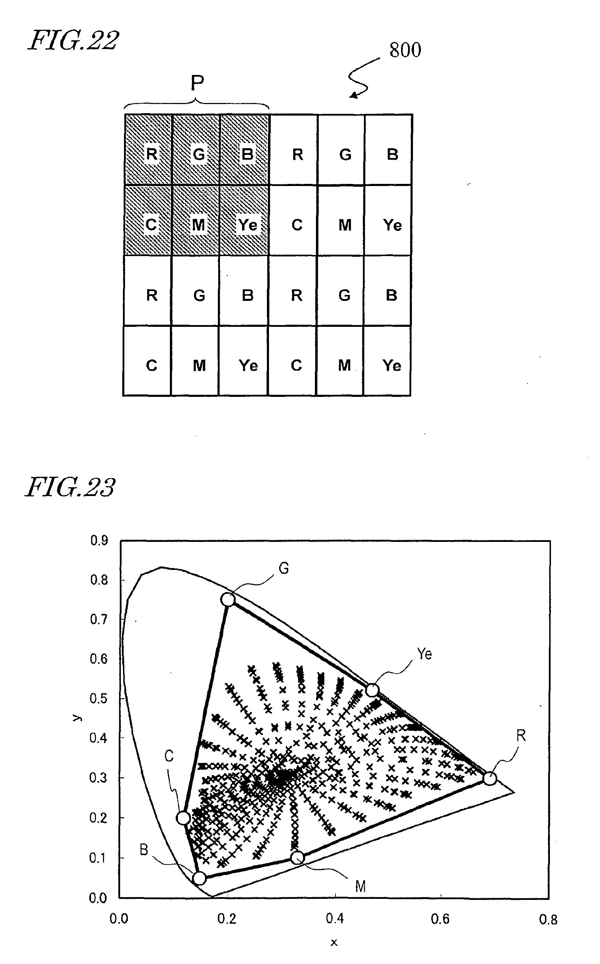

For example, as shown in FIG. **22,** Patent Document 1 discloses a liquid crystal display device **800** each of whose pixels **P** is composed of six subpixels **R, G, B, Ye, C** and **M** for displaying red, green, blue, yellow, cyan, and magenta. The color gamut of the liquid crystal display device **800** is shown in FIG. **23.** As shown in FIG. **23,** a color gamut which is represented as a hexagonal shape whose apices are at six points corresponding to the six primary colors substantially encompasses all object colors. Thus, the color gamut can be broadened by increasing the number of primary colors to be used for displaying. In the present specification, display devices which perform display by using four or more primary colors will be collectively referred to as "multiprimary display devices", and liquid crystal display devices which perform display by using four or more primary colors will be referred to as "multiprimary liquid crystal display devices (or simply, multiprimary LCDs)". Moreover, conventional commonly-used display devices which perform display by using three primaries will be collectively referred to as "three-primary display devices", and liquid crystal display devices which perform display by using three primaries will be referred to as "three-primary liquid crystal display devices (or simply, three-primary LCDs)".

As the formats of a video signal to be input to a three-primary display device, the RGB format, the YCrCb format, and the like are commonly used. A video signal of these formats contains three parameters (thus being a three-dimensional signal, as it were), thus allowing the luminances of the three primaries (red, green, and blue) used for displaying to be uniquely determined.

In order to perform display with a multiprimary display device, it is necessary to convert a video signal of a format for three-primary display devices to a video signal containing more parameters (four or more parameters). Such a video signal corresponding to four or more primary colors will be referred to as a "multiprimary signal" in the present specification.

## CITATION LIST

### PATENT LITERATURE

Patent Document 1: Japanese National Phase PCT Laid-Open Publication No. 2004-529396

### NON-PATENT LITERATURE

Non-Patent Document 1: M. R. Pointer, "The gamut of real surface colors," Color Research and Application, Vol.5, No.3, pp.145-155 (1980)

## SUMMARY OF INVENTION

### TECHNICAL PROBLEM

However, in the case where colors which are presented by a video signal of a format for three-primary display devices is to be expressed by using four or more primary colors, the luminance of each primary color will not be uniquely determined, and there will be a multitude of luminance combinations. In other words, the method of converting a three-dimensional signal to a multiprimary signal is not just one, but is highly arbitrary (highly free). Therefore, there has not been found a signal conversion technique that is optimum for a multiprimary display device. In particular, liquid crystal display devices which utilize the optical properties of liquid crystal naturally have different displaying characteristics from those of other display devices, but no signal conversion technique that takes their displaying characteristics into account have been found in the context of multiprimary liquid crystal display devices.

The present invention has been made in view of the above problems, and an objective thereof is to provide a signal conversion circuit which is suitably used in a multiprimary liquid crystal display device, especially in a multiprimary liquid crystal display device which performs display in a vertical alignment mode, and a multiprimary liquid crystal display device having such a signal conversion circuit.

### SOLUTION TO PROBLEM

A signal conversion circuit according to the present invention is a signal conversion circuit for use in a multiprimary liquid crystal display device which performs display in a vertical alignment mode by using four or more primary colors, the signal conversion circuit converting an input video signal to a multiprimary signal corresponding to four or more primary colors, wherein when generating a multiprimary signal for a pixel of the multiprimary liquid crystal display device to display dark skin according to the Macbeth chart, the signal conversion circuit applies a conversion to the video signal so that a color difference $\Delta u'v'=((u'-u_{60}')^2+(v'-v_{60}')^2)$ is 0.03 or less, the color difference $\Delta u'v'$ being defined by CIE1976 chromaticity coordinates $(u', v')$ representing a chromaticity when the pixel is viewed from a frontal direction and CIE1976 chromaticity coordinates $(u_{60}', v_{60}')$ representing a chromaticity when the pixel is viewed from a 60° oblique direction.

In a preferred embodiment, the signal conversion circuit according to the present invention applies a conversion to a video signal so that the color difference $\Delta u'v'$ is 0.008 or less when generating a multiprimary signal for the pixel of the multiprimary liquid crystal display device performing display in a vertical alignment mode to display dark skin according to the Macbeth chart.

In a preferred embodiment, the signal conversion circuit according to the present invention applies a conversion to a video signal so that the color difference $\Delta u'v'$ is 0.01 or less when generating a multiprimary signal for the pixel of the multiprimary liquid crystal display device performing display in a vertical alignment mode to display light skin according to the Macbeth chart.

Alternatively, the signal conversion circuit according to the present invention is a signal conversion circuit for use in a multiprimary liquid crystal display device which performs display in a vertical alignment mode by using four or more primary colors, the signal conversion circuit converting an input video signal to a multiprimary signal corresponding to four or more primary colors, wherein when generating a multiprimary signal for a pixel of the multiprimary liquid crystal display device to display light skin according to the Macbeth chart, the signal conversion circuit applies a conversion to the video signal so that a color difference $\Delta u'v'=((u'-u_{60}')^2+(v'-v_{60}')^2)$ is 0.01 or less, the color difference $\Delta u'v'$ being defined by CIE1976 chromaticity coordinates $(u', v')$ representing a chromaticity when the pixel is viewed from a frontal direction and CIE1976 chromaticity coordinates $(u_{60}', v_{60}')$ representing a chromaticity when the pixel is viewed from a 60° oblique direction.

In a preferred embodiment, the signal conversion circuit according to the present invention applies a conversion to a video signal so that the color difference $\Delta u'v'$ is 0.008 or less when generating a multiprimary signal for the pixel of the multiprimary liquid crystal display device performing display in a vertical alignment mode to display light skin according to the Macbeth chart.

In a preferred embodiment, when there is a number n of primary colors to be used for displaying, the signal conversion circuit according to the present invention acquires luminances of (n-3) primary colors among the n primary colors by referring to a look-up table based on the input video signal, and calculates luminances of the remaining three primary colors among the n primary colors through a calculation using the luminances of the (n-3) primary colors.

In a preferred embodiment, the signal conversion circuit according to the present invention comprises: a look-up table memory for storing the look-up table; and a calculation section for performing the calculation.

A multiprimary liquid crystal display device according to the present invention comprises: a signal conversion circuit of the above construction; and a liquid crystal display panel to which the multiprimary signal generated by the signal conversion circuit is input.

In a preferred embodiment, the liquid crystal display panel includes a first substrate, a second substrate opposing the first substrate, a vertical-alignment type liquid crystal layer disposed between the first substrate and the second substrate, the liquid crystal display panel having a plurality of subpixels each displaying one of the four or more primary colors; each of the plurality of subpixels includes a first electrode provided on the liquid crystal layer side of the first substrate, and a second electrode being provided on the second substrate and opposing the first electrode via the liquid crystal layer; and in each of the plurality of subpixels, when a predetermined voltage is applied across the liquid crystal layer, a plurality of regions whose liquid crystal molecules tilt in respectively different azimuth directions are formed.

In a preferred embodiment, the liquid crystal display panel includes: first orientation restriction means provided on the first electrode side of the liquid crystal layer; and second orientation restriction means provided on the second electrode side of the liquid crystal layer.

In a preferred embodiment, the first orientation restriction means is a rib, and the second orientation restriction means is a slit provided in the second electrode.

In a preferred embodiment, the first orientation restriction means is a first rib, and the second orientation restriction means is a second rib.

In a preferred embodiment, the first orientation restriction means is a first slit provided in the first electrode, and the second orientation restriction means is a second slit provided in the second electrode.

In a preferred embodiment, the first electrode includes at least one aperture or recessed portion formed at a predetermined position; and in each of the plurality of subpixels, when a predetermined voltage is applied across the liquid crystal layer, a plurality of liquid crystal domains are formed each exhibiting an axisymmetric orientation.

## ADVANTAGEOUS EFFECTS OF INVENTION

When converting an input video signal to a multiprimary signal corresponding to four or more primary colors, the signal conversion circuit according to the present invention applies a conversion to the video signal so that a difference between a chromaticity when a pixel is viewed from the front and a chromaticity when the pixel is viewed from an oblique direction is smaller than a predetermined value.

Specifically, when generating a multiprimary signal for displaying dark skin, the signal conversion circuit according to the present invention applies a conversion to a video signal so that a color difference $\Delta u'v' = ((u'-u_{60}')^2 + (v'-v_{60}')^2)$ is 0.03 or less, the color difference $\Delta u'v'$ being defined by CIE1976 chromaticity coordinates $(u', v')$ representing a chromaticity when the pixel is viewed from the frontal direction and CIE1976 chromaticity coordinates $(u_{60}', v_{60}')$ representing a chromaticity when the pixel is viewed from a 60° oblique direction. Alternatively, when generating a multiprimary signal for displaying light skin, the signal conversion circuit according to the present invention applies a conversion to a video signal so that the color difference $\Delta u'v'$ is 0.01 or less. As a result, deviation in hue and chroma due to whitening (viewing angle dependence of the γ characteristics) can be suppressed, whereby high-quality displaying can be realized in a multiprimary liquid crystal display device which performs display in a vertical alignment mode.

## BRIEF DESCRIPTION OF DRAWINGS

[FIG. 1] A block diagram schematically showing a liquid crystal display device **100** according to a preferred embodiment of the present invention.

[FIG. **2**] A diagram showing an exemplary pixel construction of the liquid crystal display device **100.**

[FIG. **3**] **(a)** to **(c)** are an upper plan view, a front view, and a side view for explaining conditions for chromaticity measurement.

[FIG. **4**] A graph showing a relationship between luminance characteristics in the frontal direction and luminance characteristics in a 60° oblique direction, with respect to each of a red subpixel, green subpixel, and a blue subpixel of a three-primary LCD which performs display in the MVA mode.

[FIG. **5**] An xy chromaticity diagram showing a deviation of chromaticity when a pixel of a three-primary LCD which performs display in the MVA mode is viewed from a 60° oblique direction.

[FIG. **6**] A graph showing a relationship between luminance characteristics in the frontal direction and luminance characteristics in a 60° oblique direction, with respect to each of a red subpixel, a green subpixel, a blue subpixel, a yellow subpixel, and a cyan subpixel of a multiprimary LCD which performs display in the MVA mode.

[FIG. **7**] An xy chromaticity diagram showing a deviation of chromaticity when a pixel of a multiprimary LCD which performs display in the MVA mode is viewed from a 60° oblique direction.

[FIG. **8**] A graph showing a relationship between luminance characteristics in the frontal direction and luminance characteristics in a 60° oblique direction, with respect to each of a red subpixel, a green subpixel, a blue subpixel, a yellow subpixel, and a cyan subpixel of a multiprimary LCD which performs display in the MVA mode.

[FIG. **9**] An xy chromaticity diagram showing a deviation of chromaticity when a pixel of a multiprimary LCD which performs display in the MVA mode is viewed from a 60° oblique direction.

[FIG. **10**] A graph showing a relationship between luminance characteristics in the frontal direction and luminance characteristics in a 60° oblique direction, with respect to each of a red subpixel, a green subpixel, a blue subpixel, a yellow subpixel, and a cyan subpixel of a multiprimary LCD which performs display in the MVA mode.

[FIG. **11**] An xy chromaticity diagram showing a deviation of chromaticity when a pixel of a multiprimary LCD which performs display in the MVA mode is viewed from a 60° oblique direction.

[FIG. **12**] A graph showing XYZ values of a displayed color when a pixel is viewed from the frontal direction.

[FIG. **13**] A graph showing XYZ values of a displayed color when a pixel is viewed from a 60° oblique direction.

[FIG. **14**] A block diagram showing an example of a preferable construction for a signal conversion circuit **20** included in the liquid crystal display device **100.**

[FIG. **15**] A block diagram showing another example of a preferable construction for the signal conversion circuit **20** included in the liquid crystal display device **100.**

[FIG. **16**] **(a)** to **(c)** are diagrams for describing the fundamental construction of an MVA-mode liquid crystal display panel.

[FIG. **17**] A partial cross-sectional view schematically showing a cross-sectional structure of an MVA-mode liquid crystal display panel **10A.**

[FIG. **18**] A plan view schematically showing a region corresponding to one subpixel of the MVA-mode liquid crystal display panel **10A.**

[FIG. **19**] **(a)** and **(b)** are plan views schematically showing a region corresponding to one subpixel of a CPA mode liquid crystal display panel **10D.**

[FIG. **20**] A plan view schematically showing a region corresponding to one subpixel of the CPA mode liquid crystal display panel 10D.

[FIG. **21**] An xy chromaticity diagram showing a color gamut of a three-primary LCD.

[FIG. **22**] A diagram schematically showing a conventional multiprimary LCD **800.**

[FIG. **23**] An xy chromaticity diagram showing a color gamut of the multiprimary LCD **800.**

## DESCRIPTION OF EMBODIMENTS

Liquid crystal display devices of the TN (Twisted Nematic) mode and the STN (Super Twisted Nematic) mode, which have conventionally been commonly used, have a disadvantage of a narrow viewing angle, and various display modes have been developed to improve this.

As display modes having improved viewing angle characteristics, the IPS (In-Plane Switching) mode disclosed in Japanese Examined Patent Publication No. 63-21907, the MVA (Multi-domain Vertical Alignment) mode disclosed in Japanese Laid-Open Patent Publication No. 11-242225, the CPA (Continuous Pinwheel Alignment) mode disclosed in Japanese Laid-Open Patent Publication No. 2003-43525, and the like are known.

In the aforementioned display modes, high-quality displaying is realized with a wide viewing angle. However, in vertical alignment modes (VA modes) with a wide viewing angle, e.g., the MVA mode or the CPA mode, as a problem regarding viewing angle characteristics, a problem has newly emerged in that there is a difference between the γ characteristics when observed from the front and the γ characteristics when observed obliquely, i.e., a viewing angle dependence problem of the γ characteristics. γ characteristics are the gray scale dependence of display luminance. If the γ characteristics differ between the frontal direction and the oblique direction, the state of gray scale displaying will differ depending on the direction of observation, which would be especially problematic when displaying images such as photographs and when displaying TV broadcasts or the like.

A viewing angle dependence of the γ characteristics in a vertical alignment mode is visually perceived as a phenomenon where an oblique observation results in a display luminance which is increased over the original display luminance (called "whitening"). If whitening occurs, another problem occurs in that a color which is displayed by a pixel differs between when viewed from the frontal direction and when viewed from an oblique direction.

The inventors have conducted various studies concerning signal conversion techniques to be used for multiprimary LCDs, and found a signal conversion technique which can reduce deteriorations in display quality caused by a color deviation due to whitening.

Hereinafter, an embodiment of the present invention will be described with reference to the drawings. Note that the present invention is not limited to the following embodiment.

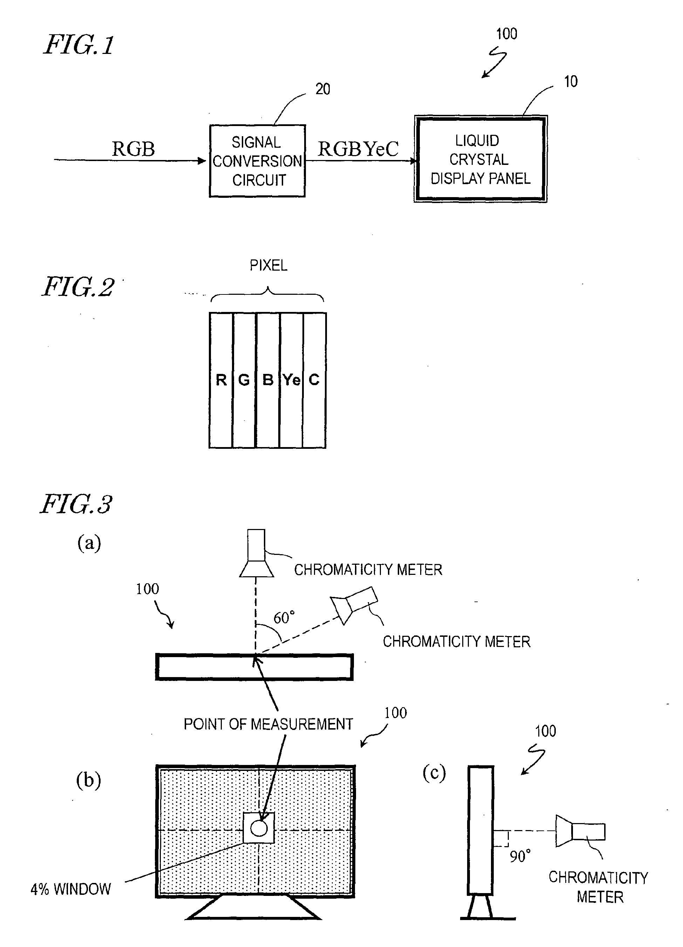

FIG. **1** shows a liquid crystal display device **100** according to the present embodiment. As shown in FIG. **1,** the liquid crystal display device **100** is a multiprimary LCD which includes a liquid crystal display panel **10** and a signal conversion circuit **20** and performs display by using four or more primary colors.

The liquid crystal display device **100** includes a plurality of pixels which are arranged in a matrix array, each pixel being defined by a plurality of subpixels. FIG. **2** shows an exemplary pixel construction of the liquid crystal display device **100.** In the example shown in FIG. **2,** the plurality of subpixels defining each pixel are a red subpixel R for displaying red, a green subpixel G for displaying green, a blue subpixel B for displaying blue, a yellow subpixel Ye for displaying yellow, and a cyan subpixel C for displaying cyan. Note that the types, number, and arrangement of subpixels constituting a pixel are not limited to those illustrated in FIG. **2.** The plurality of subpixels defining each pixel only need to include four or more subpixels that display different primary colors from one another.

The signal conversion circuit **20** converts an input video signal to a multiprimary signal corresponding to four or more primary colors. As shown in FIG. **1,** for example, the signal conversion circuit **20** converts a video signal (three-dimensional signal) of the RGB format, containing components indicating respective luminances of red, green, and blue into a multiprimary signal containing components indicating respective luminances red, green, blue, yellow, and cyan.

A multiprimary signal which is generated by the signal conversion circuit **20** is input to the liquid crystal display panel **10,** whereby a color which is in accordance with the input multiprimary signal is displayed by each pixel. As the display mode of the liquid crystal display panel **10,** vertical alignment modes which can realize wide viewing angle characteristics, e.g., the MVA mode or the CPA mode, can be suitably used. As will be described later in detail, a panel of the MVA mode or the CPA mode includes a vertical-alignment type liquid crystal layer, in which liquid crystal molecules are aligned perpendicularly to the substrate in the absence of an applied voltage. Since a plurality of regions with different azimuth directions for liquid crystal molecules to be tilted under an applied voltage are created within each subpixel, displaying with a wide viewing angle is realized.

Although the present embodiment illustrates a case where a video signal of the RGB format is input to the signal conversion circuit **20,** the video signal to be input to the signal conversion circuit **20** may be of any format so long as it is three-dimensional signal, e.g., the XYZ format or the YCrCb format.

As for the color reproducibility of a display device, memory colors are deemed important. Since in most cases it is impossible to directly compare an image that is displayed on a display device against the subject, what is important is the relationship between the displayed image and an image which is in the memory of the viewer. In a display device intended for television applications, the color of the human skin (hereinafter referred to as the "skin color") is considered especially important, among other memory colors.

When generating a multiprimary signal for displaying at least a specific skin color (the color of the human skin), the signal conversion circuit **20** in the present embodiment applies a conversion to a video signal so that the difference between the chromaticity when a pixel is viewed from the front and the chromaticity when the pixel is viewed from an oblique direction (i.e., "color difference") is smaller than a predetermined value. As a result, a color deviation due to whitening is unlikely to be visually perceived, whereby a high-quality display is realized. Hereinafter, this will be described more specifically.

Firstly, the color difference as used herein is a color difference $\Delta u'v' = ((u'-u_{60}')^2 + (v'-v_{60}')^2)$ which is defined by CIE1976 chromaticity coordinates $(u', v')$ that represent a chromaticity when the pixel is viewed from the frontal direction and CIE1976 chromaticity coordinates $(u_{60}', v_{60}')$ that represent a chromaticity when the pixel is viewed from a 60° oblique direction.

In the case where the display mode of the liquid crystal display panel **10** is a vertical alignment mode (the MVA mode or the CPA mode), the signal conversion circuit **20** in the present embodiment applies a conversion to a video signal so that the color difference $\Delta u'v'$ is 0.03 or less when generating a multiprimary signal for displaying Dark Skin according to the Macbeth chart (which is a color checker which is commonly used for checking color reproducibility). Moreover (alternatively), the signal conversion circuit **20** applies a conversion to a video signal so that the color difference $\Delta u'v'$ is 0.01 or less when generating a multiprimary signal for Light Skin.

Since chromaticity is a colorimetric property which depends on hue and chroma, a small color difference $\Delta u'v'$ means a small deviation in hue and chroma. In a conventional commonly-used three-primary LCD, the color difference $\Delta u'v'$ when displaying dark skin exceeds 0.03, and the color difference $\Delta u'v'$ when displaying light skin exceeds 0.01. Therefore, by ensuring that the color difference $\Delta u'v'$ falls within the aforementioned ranges, the deviation in hue and chroma due to whitening can be reduced as compared to a conventional three-primary LCD.

Note that the ranges of "dark skin" and "light skin" in the present specification are each defined by a Y value and a chromaticity x,y as shown in Table 1. The Y values shown in Table 1 indicate relative values against the Y value of a pixel when displaying white, which is defined as 100.

[Table 1]

|  | (Y, x, y) |
|---|---|
| dark skin | $(10.1\pm0.5, 0.400\pm0.02, 0.350\pm0.02)$ |
| light skin | $(35.8.\pm1, 0.377\pm0.02, 0.345\pm0.02)$ |

Moreover, a chromaticity when the pixel is viewed from the frontal direction and a chromaticity when the pixel is viewed from a 60° oblique direction can be measured as shown in FIGS. **3(a)** to **(c),** for example. FIGS. **3(a)** to **(c)** are an upper plan view, a front view, and a side view for explaining conditions for chromaticity measurement.

As shown in FIGS. **3(a)** and **(c),** chromaticity meters may be placed in a frontal direction and a 60° oblique direction (e.g. a direction which is tilted by 60° in a horizontal direction as shown in the figure) with respect to the display surface of the liquid crystal display device **100,** and measurements may be taken while inputting a signal such that the pixel will have a chromaticity corresponding to a dark skin or light skin chromaticity when measured by the chromaticity meter which is in the frontal direction.

Preferably, a region in the display surface which is actually subjected to chromaticity measurement (a point of measurement) has an area of about 50 to 100 pixels, in order to avoid influences of the black mask and the like in each pixel. Moreover, the Y values (luminance) for dark skin and light skin may be determined as relative values against the Y value for white, which is displayed in a window (shown in FIG. **3(b))** corresponding to 4% of the display surface, being defined as 100.

In order to further reduce deviation in hue and chroma, it is more preferable that the signal conversion circuit **20** applies a conversion to a video signal so that the color difference $\Delta u'v'$ is 0.008 or less when generating a multiprimary signal for displaying dark skin or light skin. By ensuring that the color difference $\Delta u'v'$ falls within such ranges, deviation in hue and chroma due to whitening can be greatly reduced, whereby a very high display quality is obtained.

Note that, among hue, chroma, and lightness (luminance) as the three attributes of color, deviation in lightness (luminance) is relatively unlikely to be recognized, whereas deviation in hue and chroma is relatively easily recognized. According to natural principles, it is difficult to reduce deviation in all of the above three attributes when the pixel is viewed from the frontal direction and when viewed from an oblique direction. However, the signal conversion circuit 20 of the present embodiment greatly reduces deterioration in display quality by decreasing deviation in hue and chroma with a higher priority.

Hereinafter, the aforementioned effects will be described in more detail, based on specific examples (examples based on the MVA mode).

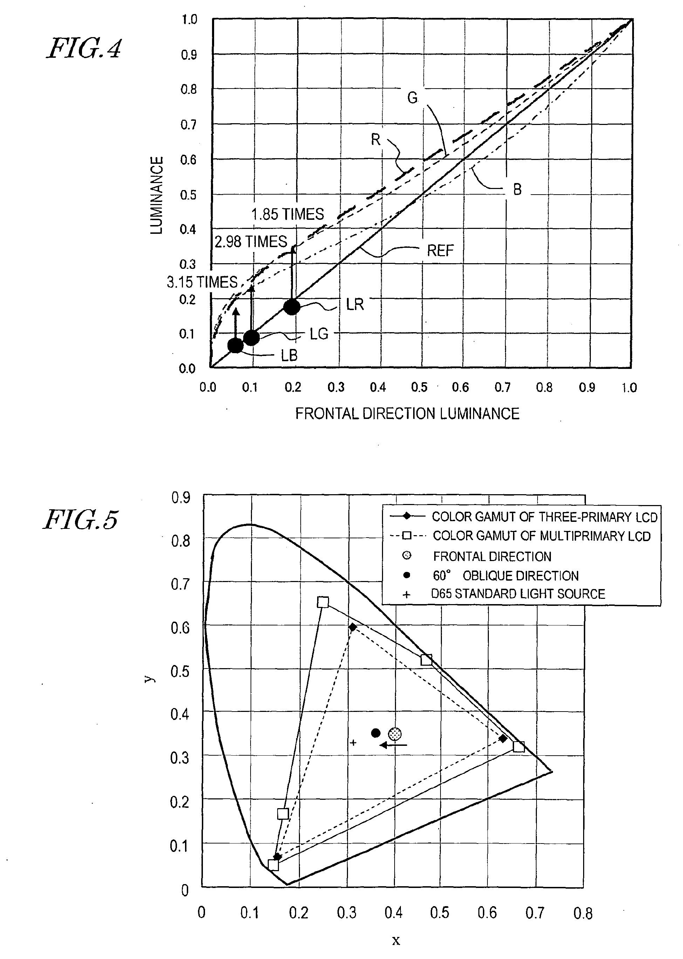

First, with reference to FIG. **4** and FIG. **5,** the reason why color deviation occurs due to.whitening in a three-primary LCD will be described.

FIG. **4** is for clearly expressing a difference between luminance characteristics in the frontal direction and luminance characteristics in a 60° oblique direction, with respect to each of a red subpixel, a green subpixel, and a blue subpixel of a three-primary LCD which performs display in the MVA mode, where the deviation of luminance characteristics is visualized by taking the frontal direction luminance as a value on the horizontal axis and taking the frontal direction luminance or the 60° oblique direction luminance (corresponding respectively to the frontal direction or the 60° oblique direction) as a value on the vertical axis. Note that the luminance of each direction is indicated with normalization, assuming that the luminance when a white voltage (highest gray scale voltage) is applied is 1.

In FIG. **4,** the luminance characteristics in the frontal direction (REF) are a straight line because the value on the horizontal axis = the value on the vertical axis. On the other hand, the luminance characteristics (R, G, B) in a 60° oblique direction are curves. The deviation amount of these curves from the straight line representing the luminance characteristics in the frontal direction quantitatively indicates a deviation amount (difference) in luminance between when observed in the front and when observed obliquely.

In a three-primary LCD, there is one combination of luminances of subpixels for a pixel to display a certain color. For example, in the case where dark skin (Y, x, y)=(10.1, 0.400, 0.350) is to be displayed in a three-primary LCD of certain specifications, the luminances of the red subpixel, the green subpixel, and the blue subpixel are (LR, LG, LB) =(0.182, 0.081, 0.062), as also shown in FIG. **4.**

However, when viewed from a 60° oblique direction, these luminances are increased, specifically, they are (LR, LG, LB)=(0.337, 0.241, 0.195). In other words, the luminances of the red subpixel, the green subpixel, and the blue subpixel are increased by 1.85 times, 2.98 times, and 3.15 times, respectively. Thus, since the luminances of the respective primary colors are increased by different ratios, the chromaticity is deviated, as can be seen from the xy chromaticity diagram shown in FIG. **5.** Specifically, since the red subpixel luminance has a lower ratio of increase than those of the green subpixel luminance and the blue subpixel luminance, the chromaticity is shifted toward the cyan side.

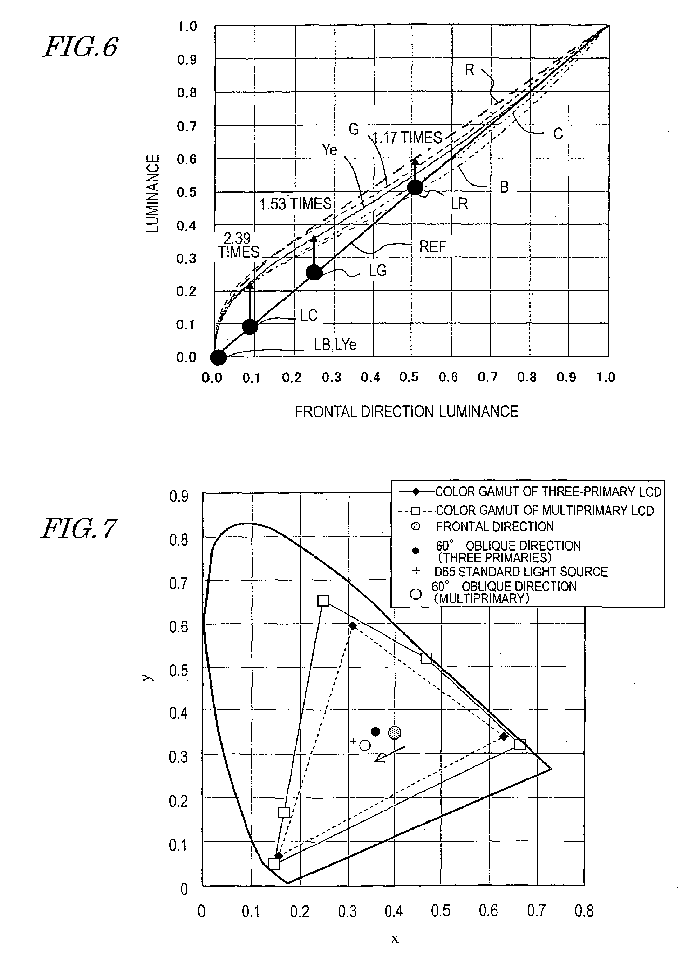

Next, with reference to FIG. **6** and FIG. **7,** the reason why color deviation also occurs due to whitening in a multiprimary LCD will be described.

FIG. **6** is a graph showing a difference between the luminance characteristics in the frontal direction and the luminance characteristics in a 60° oblique direction with respect to each of a red subpixel, a green subpixel, a blue subpixel, a yellow subpixel, and a cyan subpixel of a multiprimary LCD which performs display in the MVA mode. It can be seen from FIG. **6** that, also in a multiprimary LCD, the luminance characteristics (REF) in the frontal direction and the luminance characteristics (R, G, B, Ye, C) in a 60° oblique direction are different.

In a multiprimary LCD, a plurality of combinations of subpixel luminances exist for a pixel to display a certain color. In a multiprimary LCD having subpixels which display primary colors according to chromaticities x,y, and Y values as shown in Table 2, when displaying dark skin (Y, x, y)=(10.1, 0.400, 0.350), the luminances of a red subpixel, a green subpixel, a blue subpixel, a yellow subpixel, and a cyan subpixel are (LR, LG, LB, LYe, LC)=(0.505, 0.247, 0.000, 0.000, 0.089) as also shown in FIG. **6**, for example.

[Table 2]

|  | x | y | Y |
|---|---|---|---|
| red subpixel | 0.663 | 0.319 | 0.079 |
| green subpixel | 0.248 | 0.651 | 0.184 |
| blue subpixel | 0.150 | 0.079 | 0.056 |
| yellow subpixel | 0.468 | 0.518 | 0.504 |
| cyan subpixel | 0.168 | 0.167 | 0.178 |

However, when viewed from a 60° oblique direction, these luminances are increased, specifically, they are (LR, LG, LB, LYe, LC)=(0.593, 0.379, 0.000, 0.000, 0.213). In other words, the luminances of the red subpixel, the green subpixel, and the cyan subpixel are increased by 1.17 times, 1.53 times, and 2.39 times, respectively.

Thus, since the luminances of the respective primary colors are increased by different ratios, the chromaticity is deviated, as can be seen from the xy chromaticity diagram shown in FIG. **7.** Specifically, since the red subpixel luminance has a lower ratio of increase than those of the green subpixel luminance and the blue subpixel luminance, the chromaticity is shifted toward the cyan side. For comparison, FIG. **7** also shows a chromaticity when a three-primary LCD is viewed from a 60° oblique direction. It can be seen from FIG. **7** that the chromaticity is more deviated in this example than in the case of a three-primary LCD.

As described earlier, in an MVA-mode multiprimary LCD, if a luminance combination is randomly selected for displaying dark skin, a deviation of chromaticity as viewed from a 60° oblique direction may become large. Therefore, it is preferable to appropriately select a luminance combination, rather than randomly.

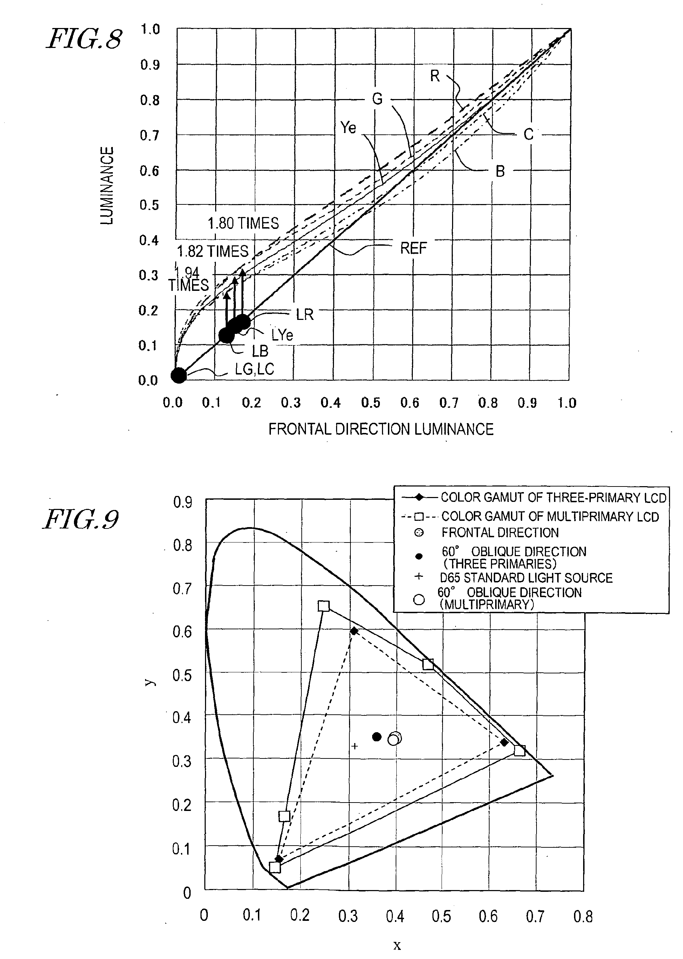

Next, with reference to FIG. **8** and FIG. **9,** the reason why a color deviation due to whitening is reduced by selecting an appropriate one from among a plurality of combinations of luminance that exist will be described.

In a multiprimary LCD having subpixels with chromaticities x,y, and Y values as shown in Table 2, a case will be considered where (LR, LG, LB, LYe, LC)=(0.187, 0.000, 0.128, 0.157, 0.000) are selected as the subpixel luminances for displaying dark skin (Y, x, y)=(10.1, 0.400, 0.350), as also shown in FIG. **8.**

When viewed from a 60° oblique direction, these luminances are increased, specifically, they are (LR, LG, LB, LYe, LC)=(0.337, 0.000, 0.249, 0.287, 0.000). However, since the luminances of the red subpixel, the blue subpixel, and the yellow subpixel are increased by substantially the same ratio, i.e., 1.80 times, 1.94 times, and 1.82 times, respectively, the chromaticity is hardly shifted, as can be seen from the xy chromaticity diagram shown in FIG. **9.**

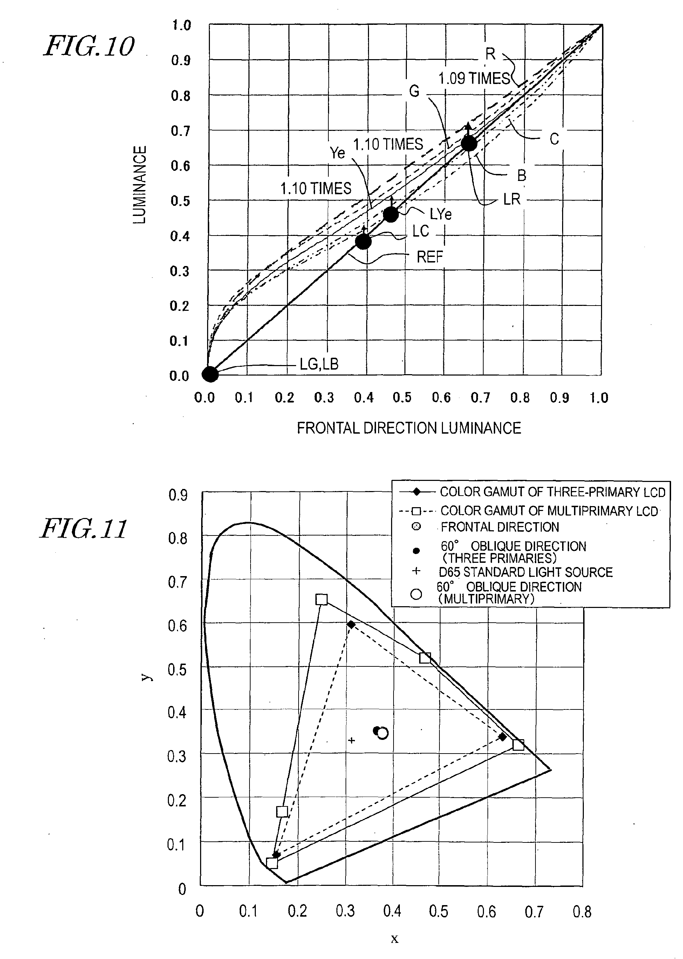

Although the case of displaying dark skin has been described, the same is also true of the case of displaying light skin. Hereinafter, this will be described with reference to FIG. **10** and FIG. **11.**

In a multiprimary LCD having subpixels with chromaticities x,y, and Y values as shown in Table 2, a case will be considered where (LR, LG, LB, LYe, LC)=(0.646, 0.000, 0.000, 0.470, 0.394) are selected as the subpixel luminances for displaying light skin (Y, x, y)=(35.8, 0.377, 0.345), as also shown in FIG. **10.**

When viewed from a 60° oblique direction, these luminances are increased, specifically, they are (LR, LG, LB, LYe, LC)=(0.703, 0.000, 0.000, 0.519, 0.432). However, since the luminances of the red subpixel, the yellow subpixel, and the cyan subpixel are increased by substantially the same ratio, i.e., 1.09 times, 1.10 times, and 1.10 times, respectively, the chromaticity is hardly shifted, as can be seen from the xy chromaticity diagram shown in FIG. **11.**

As described above, in the liquid crystal display device **100** according to the present embodiment, among combinations of subpixel luminances for a pixel to display a certain color, a combination that reduces the chromaticity deviation is selected. Table 3 shows a combination of luminances of a red subpixel, a green subpixel, a blue subpixel, a yellow subpixel, and a cyan subpixel for displaying dark skin (Y, x, y)=(10.1, 0.400, 0.350) in a multiprimary LCD having subpixels with chromaticities x,y, and Y values as shown in Table 2. In addition to the luminances of the respective subpixels (LR, LG, LB, LYe, LC), Table 3 also shows luminances when viewed from a 60° oblique direction (i.e., luminances under whitening), and a Y value and a chromaticity x,y representing the color of the pixel when viewed from a 60° oblique direction, as well as a color difference Δu'v'. Moreover, Table 4 shows combinations of luminances of subpixels, etc., for displaying the same dark skin in a three-primary LCD.

[Table 3]

| | (LR,LG,LB,LYe,LC) | 60° oblique direction whitening | 60° oblique direction (Y,x,y) | color difference Δu'v' |
|---|---|---|---|---|
| | | | subpixel luminance combinations that can display dark skin (Y,x,y)=(10.1, 0.400, 0.350) | |
| # 1 | (0.187,0.000, 0.128,0.157,0.000) | (0.337,0.000, 0.249,0.287,0.000) | (18.5,0.394,0.343) | 0.004 |
| # 2 | (0.247,0.000, 0.000,0.128,0.099) | (0.388,0.000, 0.000,0.261,0.222) | (20.1,0.379,0.344) | 0.014 |
| # 3 | (0.505,0.298, 0.111,0.000,0.000) | (0.593,0.414, 0.237,0.000,0.000) | (13.6,0.350,0.315) | 0.033 |
| # 4 | (0.505,0.247, 0.000,0.000,0.089) | (0.593,0.379, 0.000,0.000,0.213) | (15.4,0.337,0.321) | 0.041 |
| # 5 | (0.426,0.180, 0.006,0.037,0.087) | (0.529,0.329, 0.080,0.154,0.211) | (22.2,0.345,0.339) | 0.036 |
| . . . | . . . | . . . | . . . | . . . |

[Table 4]

| (LR,LG,LB) | 60° oblique direction whitening | 60° oblique direction (Y,x,y) | color difference Δu'v' |
|---|---|---|---|
| | | subpixel luminance combinations that can display dark skin (Y,x,y)=(10.1, 0.400, 0.350) | |
| (0.182,0.081,0.062) | (0.296,0.199,0.157) | (21.7,0.359,0.352) | 0.029 |

As shown in Table 3, in a multiprimary LCD, a plurality of luminance combinations exist for displaying dark skin (even besides #1 to #5 exemplified herein, as will be appreciated). On the other hand, in a three-primary LCD, there is one luminance combination for displaying dark skin, as shown in Table 4. The signal conversion circuit **20** generates a multiprimary signal so that a combination ensuring that the color difference Δu'v' is 0.03 or less (e.g., #1 or #2) is selected from among the plurality of combinations. Note that, as has already been described, a combination ensuring that the color difference Δu'v' is 0.008 or less is more preferably selected (e.g., #1).

Moreover, Table 5 similarly shows combinations of subpixel luminances, etc., for displaying light skin (Y, x, y) =(35.8, 0.377, 0.345) in a multiprimary LCD, and Table 6 shows combinations of subpixel luminances, etc., for displaying the same light skin in a three-primary LCD.

[Table 5]

| | (LR,LG,LB,LYe,LC) | 60° oblique direction whitening | 60° oblique direction (Y,x,y) | color difference Δu'v' |
|---|---|---|---|---|
| | | | subpixel luminance combinations that can display light skin (Y,x,y)=(35.8, 0.377, 0.345) | |
| # 1 | (0.652,0.104, 0.231,0.470,0.212) | (0.709,0.264, 0.315,0.519,0.308) | (43.8,0.352,0.336) | 0.016 |
| # 2 | (1.000,0.379, 0.049,0.289,0.344) | (1.000,0.469, 0.178,0.384,0.397) | (43.9,0.354,0.337) | 0.013 |
| # 3 | (0.500,0.000, 0.334,0.548,0.133) | (0.588,0.000, 0.377,0.579,0.251) | (40.4,0.358,0.325) | 0.014 |
| # 4 | (0.426,0.001, 0.505,0.586,0.003) | (0.529,0.035, 0.488,0.610,0.053) | (39.2,0.377,0.345) | 0.000 |

(continued)

| | (LR,LG,LB,LYe,LC) | 60° oblique direction whitening | 60° oblique direction (Y,x,y) | color difference Δu'v' |
|---|---|---|---|---|
| | subpixel luminance combinations that can display light skin (Y,x,y,)=(35.8, 0.377, 0.345) | | | |
| # 5 | (0.646,0.000, 0.000,0.470,0.394) | (0.703,0.000, 0.000,0.519,0.432) | (39.4,0.377,0.346) | 0.000 |
| . . . | . . . | . . . | . . . | . . . |

[Table 6]

| (LR,LG,LB) | 60° oblique direction whitening | 60° oblique direction (Y,x,y) | color difference Δu'v' |
|---|---|---|---|
| subpixel luminance combinations that can display light skin (Y,x,y,)=(35.8, 0.377, 0.345) | | | |
| (0.574, 0.305,0.254) | (0.621,0.390,0.303) | (43.2,0.366,0.352) | 0.011 |

As shown in Table 5, in a multiprimary LCD, a plurality of luminance combinations exist for displaying light skin (even besides #1 to #5 exemplified herein). On the other hand, in a three-primary LCD, there is one luminance combination for displaying light skin, as shown in Table 6. The signal conversion circuit **20** generates a multiprimary signal so that, in an MVA-mode multiprimary LCD, a combination ensuring that the color difference Δu'v' is 0.01 or less (e.g., #4 or #5) is selected from among the plurality of combinations. Note that, as has already been described, a combination ensuring that the color difference Δu'v' is 0.008 or less is more preferably selected (for example, #4 and #5 satisfy this condition).

Next, the reason why the chromaticity is not shifted if the luminances of the subpixels are increased by the same ratio when viewed from an oblique direction will be described by using mathematical equations.

First, when a value obtained by multiplying the luminance and chromaticity of each subpixel is expressed by eqs. (1) to (5) below, the color (X, Y, Z) which is displayed by the pixel will be a sum thereof, as expressed by eqs. (6) to (8) below.

$$(\text{red subpixel luminance}) \times (\text{red subpixel chromaticity}) = LR(XR, YR, ZR) \cdots (1)$$

$$(\text{green subpixel luminance}) \times (\text{green subpixel chromaticity}) = LG(XG, YG, ZG) \cdots (2)$$

$$(\text{blue subpixel luminance}) \times (\text{blue subpixel chromaticity}) = LB(XB, YB, ZB) \cdots (3)$$

(yellow subpixel luminance) $\times$ (yellow subpixel chromaticity)=LYe(XYe, YYe, ZYe)$\cdot\cdot\cdot$(4)

(cyan subpixel luminance) $\times$ (cyan subpixel chromaticity)=LC(XC, YC, ZC) $\cdot\cdot\cdot$(5)

$$X=LR\times XR+LG\times XG+LB\times XB+LYe\times XYe+LC\times XC \qquad \cdot\cdot\cdot(6)$$

$$Y=LR\times YR+LG\times YG+LB\times YB+LYe\times YYe+LC\times YC \qquad \cdot\cdot\cdot(7)$$

$$Z=LR\times ZR+LG\times ZG+LB\times ZB+LYe\times ZYe+LC\times ZC \qquad \cdot\cdot\cdot(8)$$

This color (X, Y, Z) which is represented by tristimulus values is converted to a chromaticity x,y by eqs. (9) and (10) below.

$$x=X/(X+Y+Z) \qquad \cdot\cdot\cdot(9)$$

$$y=Y/(X+Y+Z) \qquad \cdot\cdot\cdot(10)$$

On the other hand, if the luminance of each subpixel is uniformly multiplied A times when viewed from an oblique direction, the color when viewed from the oblique direction will be a sum (AX, AY, AZ) of A$\times$LR(XR, YR, ZR), A $\times$LG(XG, YG, ZG), A $\times$ LB(XB, YB, ZB), A$\times$LYe(XYe, YYe, ZYe), and A$\times$LC(XC, YC, ZC), which are respectively the products of A times multiplication of the right-hand sides of eqs. (1) to (5). This color (AX, AY, AZ) is converted to chromaticity x,y by eqs. (11) and (12) below.

$$x=AX/(AX+AY+AZ)\cdot\cdot\cdot(11)$$

$$y=AY/(AX+AY+AZ)\cdot\cdot\cdot(12)$$

The right-hand sides of eqs. (11) and (12) are eventually reduced to eqs. (11)' and (12)' below because the A that are included in the denominator and the numerator are canceled out.

$$x=AX/(AX+AY+AZ)=X/(X+Y+Z) \cdot \cdot \cdot (11)'$$

$$y=AY/(AX+AY+AZ)=Y/(X+Y+Z) \cdot \cdot \cdot (12)'$$

As can be seen from a comparison of eqs. (9) and (10) against eqs. (11)' and (12)', the chromaticity x,y when viewed from the frontal direction and the chromaticity x,y when viewed from an oblique direction are the same, i.e., the chromaticity is not shifted (however, the luminance is multiplied A times). Although a chromaticity x,y in the XYZ (CIE1931) color system is described herein, the same is also true of a chromaticity u', v' in the $L^*u^*v^*$ (CIE1976) color system.

Although what has been described above is a case where the luminance of each subpixel is increased by the same ratio when a pixel is viewed from an oblique direction (uniformly multiplied A times), this being for simplicity of description, it is not necessary for the luminance of each subpixel to be increased by the same ratio in order to suppress shifting in chromaticity.

For example, in the case where the luminances of the red subpixel, the green subpixel, the blue subpixel, the yellow subpixel, and the cyan subpixel are respectively multiplied B times, C times, D times, E times, F times when viewed from an oblique direction, it suffices if the color when viewed from the oblique direction, i.e., a sum of B $\times$ LR (XR, YR, ZR), C $\times$ LG(XG, YG, ZG), D X LB (XB, YB, ZB), E $\times$ LYe(XYe, YYe, ZYe), and F $\times$ LC(XC, YC, ZC), which respectively are products of B times multiplication, C times multiplication, D times multiplication, E times multiplication, and F times multiplication of the right-hand sides of eqs. (1) to (5), is expressed in the form of (AX, AY, AZ).

Stated otherwise, it is not necessary that the values obtained by multiplying the luminance and chromaticity of each subpixel are uniformly multiplied A times before the summation, but it suffices if the sum of them is in an A times-multiplied form in the end. Hereinafter, this point will be described by using a more specific example.

When (LR, LG, LB, LYe, LC)=(0.426, 0.001, 0.505, 0.586, 0.003) are selected as the subpixel luminances for displaying light skin (Y, x, y)=(35.8, 0.377, 0.345), the values obtained by multiplying the luminance and chromaticity of each subpixel are calculated from eqs. (13) to (17) below.

$$LR(XR, YR, ZR)=0.426(0.164, 0.079, 0.004) \quad \cdot \cdot \cdot (13)$$

$$LG(XG, YG, ZG)=0.001(0.070, 0.187, 0.029) \quad \cdot \cdot \cdot (14)$$

$$LB(XB, YB, ZB)=0.505(0.107, 0.056, 0.548) \quad \cdot \cdot \cdot (15)$$

$$LYe(XYe, YYe, ZYe)=0.586(0.455, 0.504, 0.014) \cdot \cdot \cdot (16)$$

$$LC(XC, YC, ZC)=0.003(0.179, 0.178, 0.707) \quad \cdot \cdot \cdot (17)$$

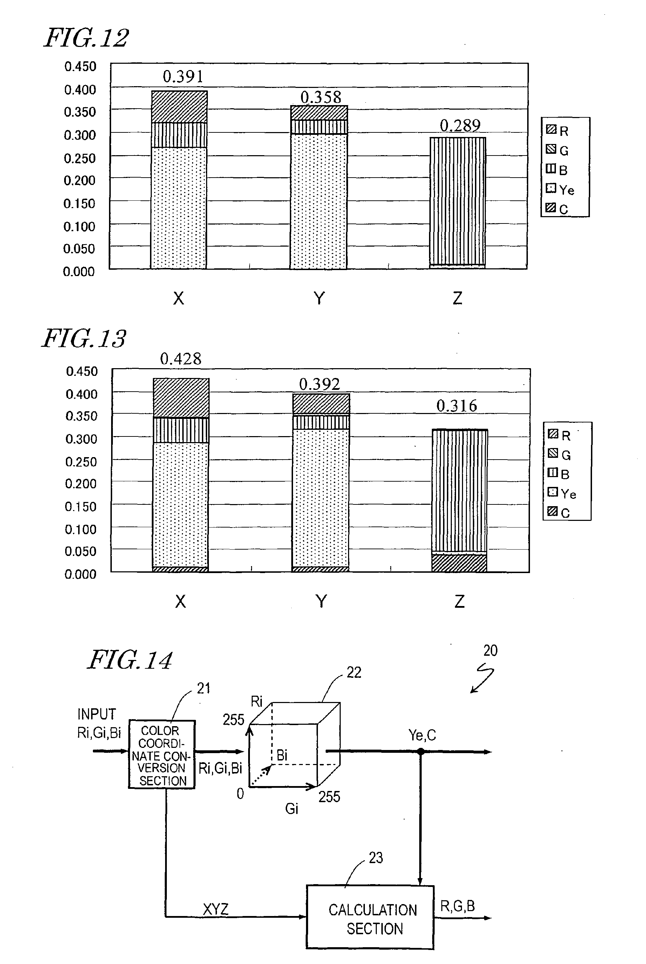

Therefore, the color (X, Y, Z) to be displayed by the pixel is (0.391, 0.358, 0.289), as can be seen from eqs. (18) to (20) below and FIG. **12.**

$$X = 0.426 \times 0.164 + 0.001 \times 0.070 + 0.505 \times 0.107 +$$

$$0.586 \times 0.455 + 0.003 \times 0.179 = 0.391 \quad \cdots (18)$$

$$Y = 0.426 \times 0.079 + 0.001 \times 0.187 + 0.505 \times 0.056 +$$

$$0.586 \times 0.504 + 0.003 \times 0.178 = 0.358 \quad \cdots (19)$$

$$Z = 0.426 \times 0.004 + 0.001 \times 0.029 + 0.505 \times 0.548 +$$

$$0.586 \times 0.014 + 0.003 \times 0.707 = 0.289 \quad \cdots (20)$$

On the other hand, the luminances of the subpixels when viewed from a 60° oblique direction are (LR, LG, LB, LYe, LC)=(0.529, 0.035, 0.488, 0.610, 0.053). Therefore, the values obtained by multiplying the luminance and chromaticity of each subpixel when viewed from the 60° oblique direction are products of 1.24 times multiplication, 35.0 times multiplication, 0.97 times multiplication, 1.04 times multiplication, and 17.7 times multiplication of the right-hand sides of eqs. (13) to (17), respectively, as can be seen from eqs. (21) to (25) below.

$$0.529(0.164, \ 0.079, \ 0.004) =$$

$$1.24 \times 0.426(0.164, \ 0.079, \ 0.004) \quad \cdots (21)$$

$$0.035(0.070, \ 0.187, \ 0.029) =$$

$$35.0 \times 0.001(0.070, \ 0.187, \ 0.029) \quad \cdots (22)$$

$$0.488(0.107, \ 0.056, \ 0.548) =$$

$$0.97 \times 0.505(0.107, \ 0.056, \ 0.548) \quad \cdots (23)$$

$$0.610(0.455,\ 0.504,\ 0.014)=$$

$$1.04\times0.586(0.455,\ 0.504,\ 0.014)\quad\cdot\cdot\cdot(24)$$

$$0.053(0.179,\ 0.178,\ 0.707)=$$

$$17.7\times0.003(0.179,\ 0.178,\ 0.707)\quad\cdot\cdot\cdot(25)$$

Moreover, the color (X, Y, Z) when viewed from the 60° oblique direction is (0.428, 0.392, 0.316), as can be seen from eqs. (26) to (28) below and FIG. **13.**

$$X=0.529\times0.164+0.035\times0.070+0.488\times0.107+$$

$$0.610\times0.455+0.053\times0.179=0.428\quad\cdot\cdot\cdot(26)$$

$$Y=0.529\times0.079+0.035\times0.187+0.488\times0.056+$$

$$0.610\times0.504+0.053\times0.178=0.392\quad\cdot\cdot\cdot(27)$$

$$Z=0.529\times0.004+0.035\times0.029+0.488\times0.548+$$

$$0.610\times0.014+0.053\times0.707=0.316\quad\cdot\cdot\cdot(28)$$

As can also be seen from eq. (29) below, the respective components of this color (X, Y, Z)=(0.428, 0.392, 0.316) when viewed from the 60° oblique direction are products of universal 1.094 times multiplication of the respective components of the color (X, Y, Z)=(0.391, 0.358, 0.289) when viewed from the frontal direction. Thus, in the end, the chromaticity when viewed from the frontal direction and the chromaticity when viewed from an oblique direction are the same, and the chromaticity is not shifted.

$$(X,\ Y,\ Z)=(0.428,\ 0.392,\ 0.316)$$

$$=1.094(0.391,\ 0.358,\ 0.289)\quad\cdot\cdot\cdot(29)$$

As described above, so long as the signal conversion circuit **20** generates a multiprimary signal such that a combination which reduces chromaticity deviation is selected from among combinations of subpixel luminances, the signal conversion circuit **20** does not need to select a combination which ensures that the luminances of the respective subpixels are increased by substantially the same ratio when viewed from an oblique direction.

Although the above description was given by taking the MVA mode as a specific example, the CPA mode also exhibits viewing angle characteristics similar to those of the MVA mode. Therefore, in a CPA-mode multiprimary LCD, too, the deviation of chromaticity as viewed from an oblique direction can be suppressed by appropriately selecting a luminance combination.

Next, an example of a more specific construction of the signal conversion circuit **20** will be described.

For example, the signal conversion circuit **20** may include a look-up table which contains data indicating subpixel luminances corresponding to colors to be identified by a video signal (three-dimensional signal), thus being able to generate a multiprimary signal by referring to this look-up table in accordance with the input video signal. However, if data representing subpixel luminances concerning all colors is included in the look-up table, the look-up table will have a large data amount, thus making it difficult to simply construct a look-up table by using an inexpensive memory with a small capacity.

FIG. **14** shows an example of a preferable construction of the signal conversion circuit **20**. The signal conversion circuit **20** shown in FIG. **14** includes a color coordinate conversion section **21,** a look-up table memory **22,** and a calculation section **23.**

The color coordinate conversion section **21** receives a video signal representing the luminance of three primaries, and converts color coordinates in the RGB color space to color coordinates in the XYZ color space. Specifically, as shown in eq. (30) below, the color coordinate conversion section **21** performs a matrix conversion to an RGB signal (which contains components Ri, Gi, Bi corresponding to the respective luminances of red, green, blue) to obtain XYZ values. The matrix of 3 rows by 3 columns which is exemplified in eq. (30) is defined based on the BT.709 standard.

[math. 1]

$$\begin{pmatrix} X \\ Y \\ Z \end{pmatrix} = \begin{pmatrix} 0.4124 & 0.3576 & 0.1804 \\ 0.2127 & 0.7152 & 0.0722 \\ 0.0193 & 0.1192 & 0.9502 \end{pmatrix} \begin{pmatrix} Ri \\ Gi \\ Bi \end{pmatrix}$$

$$\cdots (30)$$

A look-up table is stored in the look-up table memory **22**. This look-up table includes data representing the luminances of a yellow subpixel and a cyan subpixel corresponding to the luminances Ri, Gi, Bi of the three primaries indicated by the video signal. Note that, herein, the luminances Ri, Gi, Bi are obtained by applying an inverse $\gamma$ correction to gray scale values which are expressed in 256 gray scale levels, and the number of colors that are identifiable by the video signal is $256 \times 256 \times 256$. On the other hand, the look-up table in the look-up table memory **22** includes data of a $256 \times 256 \times 256$ three-dimensional matrix structure corresponding to the number of colors that are identifiable by the video signal. By referring to the look-up table in the look-up table memory **22**, luminances Ye, C of the yellow subpixel and the cyan subpixel corresponding to the luminances Ri, Gi, Bi can be obtained.

The calculation section **23** performs a calculation using the XYZ values obtained by the color coordinate conversion section **21** and the luminances Ye, C of the yellow subpixel and the cyan subpixel obtained from the look-up table memory **22,** thus calculating luminances R, G, B of the red subpixel, the green subpixel, and the blue subpixel. Specifically, the calculation section **23** performs the calculation according to eq. (31) below.

[math. 2]

$$\begin{pmatrix} R \\ G \\ B \end{pmatrix} = \begin{pmatrix} X_R & X_G & X_B \\ Y_R & Y_G & Y_B \\ Z_R & Z_G & Z_B \end{pmatrix}^{-1} \begin{pmatrix} X - (X_{Ye} \times Ye + X_C \times C) \\ Y - (Y_{Ye} \times Ye + Y_C \times C) \\ Z - (Z_{Ye} \times Ye + Z_C \times C) \end{pmatrix} \quad \cdots (31)$$

Hereinafter, the reason why the luminances R, G, B of the red subpixel, the green subpixel, and the blue subpixel are calculated by performing the calculation shown in eq. (31) will be described with reference to eqs. (32) and (33) below.

[math. 3]

$$\begin{pmatrix} X \\ Y \\ Z \end{pmatrix} = \begin{pmatrix} X_R & X_G & X_B & X_{Ye} & X_C \\ Y_R & Y_G & Y_B & Y_{Ye} & Y_C \\ Z_R & Z_G & Z_B & Z_{Ye} & Z_C \end{pmatrix} \begin{pmatrix} R \\ G \\ B \\ Ye \\ C \end{pmatrix} \qquad \cdots (32)$$

[math. 4]

$$\begin{pmatrix} X \\ Y \\ Z \end{pmatrix} = \begin{pmatrix} X_R & X_G & X_B \\ Y_R & Y_G & Y_B \\ Z_R & Z_G & Z_B \end{pmatrix} \begin{pmatrix} R \\ G \\ B \end{pmatrix} + \begin{pmatrix} X_{Ye} & X_C \\ Y_{Ye} & Y_C \\ Z_{Ye} & Z_C \end{pmatrix} \begin{pmatrix} Ye \\ C \end{pmatrix} \qquad \cdots (33)$$

Assuming that the color that is identified by a video signal which is input to the signal conversion circuit **20** is identical to the color that is identified by a multiprimary signal which is output from the signal conversion circuit **20,** the XYZ values which are obtained by converting the luminances Ri, Bi, Gi of the three primaries are also expressed by the matrix conversion equation for the luminances R, G, B, Ye, C of the red subpixel, the green subpixel, the blue subpixel, the yellow subpixel, and the cyan subpixel, as shown by eq. (32). Coefficients $X_R$, $Y_R$, $Z_R$ ...$Z_C$ of the conversion matrix of 3 rows by 5 columns shown in eq. (32) are determined based on the XYZ values of the respective subpixels of the liquid crystal display panel **10.**

The right-hand side of eq. (32) can be transformed into a sum of a product of multiplying R, G, B by a conversion matrix of 3 rows by 3 columns and a product of multiplying Ye, C by a conversion matrix of 3 rows by 2 columns, as shown in eq. (33). By further transforming eq. (33), eq. (31) is obtained. Therefore, by performing a calculation in accordance with eq. (31), the luminances R, G, B of the red subpixel, the green subpixel, and the blue subpixel can be calculated.

Thus, the calculation section **23** is able to obtain luminances R, G, B of the red subpixel, the green subpixel, and the blue subpixel based on the XYZ values obtained by the color coordinate conversion section **21** and the luminances Ye, C of the yellow subpixel and the cyan subpixel obtained from the look-up table memory 22.

As described above, in the signal conversion circuit **20** shown in FIG. **14,** the luminance of two subpixels are first determined by using a look-up table which is stored in the look-up table memory **22,** and thereafter the luminances of the other three subpixels are determined by the calculation section **23.** Therefore, the look-up table to be stored in the look-up table memory **22** does not need to contain data indicating the luminances of all five subpixels, but may only contain data indicating the luminances of two subpixels among the five subpixels. Thus, by adopting the construction as shown in FIG. **14,** it is possible to simply construct a look-up table by using an inexpensive memory with a small capacity.

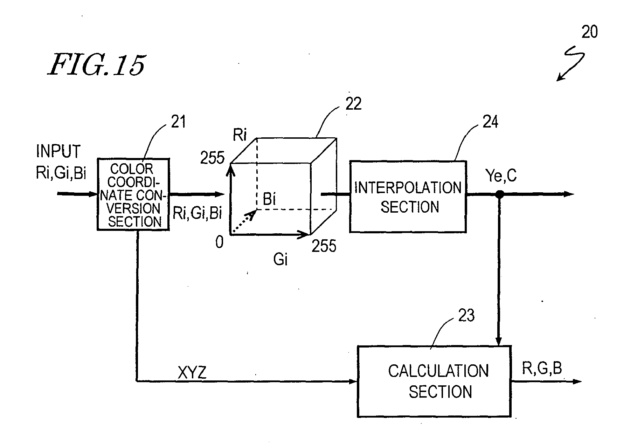

FIG. **15** shows another example of a preferable construction for the signal conversion circuit **20.** The signal conversion circuit **20** shown in FIG. **15** differs from the signal conversion circuit **20** shown in FIG. **14** in that it further includes an interpolation section **24** in addition to the color coordinate conversion section **21,** the look-up table memory **22,** and the calculation section **23.**

Moreover, in the signal conversion circuit **20** shown in FIG. **14,** the data of the look-up table stored in the look-up table memory **22** corresponds to the same number of colors as the number of colors identified by the video signal, whereas in the signal conversion circuit **20** shown in FIG. **15,** the data in the look-up table corresponds to a smaller number of color than the number of colors identified by the video signal.

Herein, the luminances Ri, Gi, Bi of the three primaries indicated by the video signal each have 256 gray scale levels, and the number of colors identified by the video signal is 256×256×256. On the other hand, the look-up table in the look-up table memory **22** includes data of a 17 ×17×17 three-dimensional matrix structure corresponding to gray scale levels that are 16 levels apart, e.g., 0, 16, 32, ..., 256 gray scale levels, for each of the luminances Ri, Gi, Bi. That is, the look-up table includes 17×17×17 data as obtained by thinning out the 256×256×256.

By using the data (luminances of the yellow subpixel and the cyan subpixel) contained in the look-up table, the interpolation section **24** interpolates between the luminances Ye, C of the yellow subpixel and the cyan subpixel that correspond to the gray scale levels which have been lost through thinning out. The interpolation section **24** performs interpolation via linear approximation, for example. In this manner, the luminances Ye, C of the yellow subpixel and the cyan subpixel corresponding to the luminances Ri, Gi, Bi of the three primaries can be obtained for all gray scale levels.

By using the XYZ values obtained by the color coordinate conversion section **21** and the luminances Ye, C of the yellow subpixel and the cyan subpixel obtained by the look-up table memory **22** and the interpolation section **24,** the calculation section **23** calculates the luminances R, G, B of the red, green, and blue subpixels.

As described above, in the signal conversion circuit **20** shown in FIG. **15,** there are fewer colors corresponding to the data in the look-up table stored in the look-up table memory **22** than the number of colors identified by the video signal. Therefore, the data amount in the look-up table can be further reduced.

The above description illustrates an example where data indicating the luminances of the yellow subpixel and the cyan subpixel is contained in a look-up table and the calculation section **23** calculates the luminances of the remaining red subpixel, green subpixel, and blue subpixel. However, the present invention is not limited thereto. By including data indicating the luminances of any two arbitrary subpixels in the look-up table, it becomes possible to calculate the luminances of the other three subpixels with the calculation section **23.**

Moreover, also in the case where the number of subpixels defining each pixel is not five as illustrated, a similar technique can be used to reduce the data amount in the look-up table. Given that the number of primary colors used for displaying is n, by referring to a look-up table, the signal conversion circuit **20** may acquire the luminances of (n-3) primary colors among the n primary colors (i.e., luminance data concerning (n-3) primary colors is included in the look-up table), and the luminances of the remaining three primary colors among the n primary colors may be calculated through a calculation using the luminances of the (n-3) primary colors.

For example, in the case where one pixel is defined by four subpixels, the signal conversion circuit **20** may acquire the luminance of one subpixel by referring to a look-up table, and the luminances of the remaining three subpixels may be calculated through a calculation by the calculation section **23.** The four subpixels may be, for example, a red subpixel, a green subpixel, a blue subpixel, and a yellow subpixel.

Moreover, in the case where one pixel is defined by six subpixels, the luminances of three subpixels may be acquired by referring to a look-up table, and the luminances of the remaining three subpixels may be calculated by the calculation section **23.** The six subpixels may be, for example, a red subpixel, a green subpixel, a blue subpixel, a yellow subpixel, a cyan subpixel, and a magenta subpixel.

The constituent elements in the signal conversion circuit **20** can be implemented in hardware, or some of all of them may be implemented in software. In the case where these constituent elements are implemented in software, they may be constructed by using a computer, this computer having a CPU (central processing unit) for executing various programs, a RAM (random access memory) functioning as a work area for executing such programs, and the like. Then, programs for realizing the functions of the respective constituent elements are executed in the computer, thus allowing the computer to operate as the respective constituent elements.

Moreover, the programs may be supplied from a storage medium to the computer, or supplied to the computer via a communications network. The storage medium may be constructed so as to be removable from the computer, or may be incorporated into the computer. This storage medium may be mounted to the computer so that the computer can directly read the program code recorded thereon, or mounted so that the program code is read via a program reading device which is connected to the computer as an external storage device. The followings can be used as the storage medium, for example: a tape such as a magnetic tape or a cassette tape; a disk including a magnetic disk such as a flexible disk/hard disk, a magneto-optical disk such as an MO or an MD, and an optical disk such as a CD-ROM, a DVD, or a CD-R; a card such as an IC card (including memory cards) or an optical card; or a semiconductor memory such as a mask ROM, an EPROM (Erasable Programmable Read Only Memory), an EEPROM (Electrically Erasable Programmable Read Only Memory), or a flash ROM. Moreover, in the case where a program is supplied via a communications network, the program may be in the form of a carrier wave or a data signal such that its program code is embodied through an electronic transmission.

Next, a specific example of the construction of the liquid crystal display panel **10** will be described.

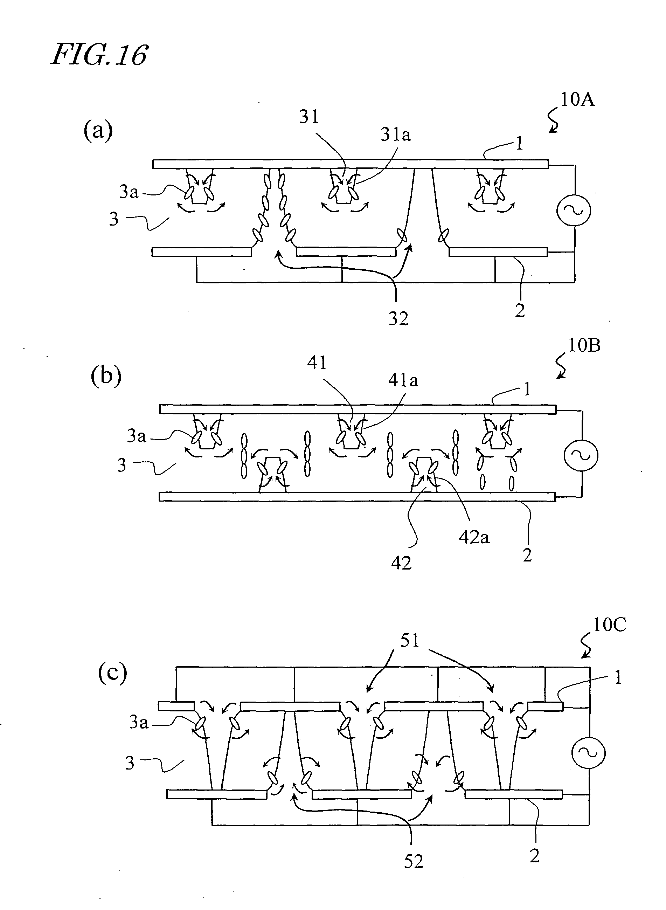

First, the fundamental construction of the MVA-mode liquid crystal display panel **10** will be described with reference to FIGS. **16(a)** to **(c).**

Each subpixel of liquid crystal display panels **10A, 10B,** and **10C** includes a first electrode **1,** a second electrode **2** opposing the first electrode **1,** and a vertical-alignment type liquid crystal layer **3** provided between the first electrode **1** and the second electrode **2**. In the vertical-alignment type liquid crystal layer **3,** under no applied voltage, liquid crystal molecules **3a** having a negative dielectric anisotropy are aligned substantially perpendicular (e.g., no less than 87° and no more than 90°) to the planes of the first electrode **1** and the second electrode **2**. Typically, it is obtained by providing a vertical alignment film (not shown) on a surface, on the liquid crystal layer **3** side, of each of the first electrode **1** and the second electrode **2**.

On the first electrode **1** side of the liquid crystal layer **3**, first orientation restriction means **(31, 41, 51)** are provided. On the second electrode **2** side of the liquid crystal layer **3**, second orientation restriction means **(32, 42, 52)** are provided. In a liquid crystal region which is defined between a first orientation restriction means and a second orientation restriction means, liquid crystal molecules **3a** are subject to orientation restriction forces from the first orientation restriction means and the second orientation restriction means, and when a voltage is applied between the first electrode **1** and the second electrode **2,** they fall (tilt) in a direction shown by arrows in the figure. That is, since the liquid crystal molecules **3a** will fall in a uniform direction within each liquid crystal region, each liquid crystal region can be regarded as a domain.

Within each subpixel, the first orientation restriction means and second orientation restriction means (which may be collectively referred to as "orientation restriction means") are each provided in a stripe shape; FIGS. **16(a)** to **(c)** are cross-sectional views along a direction which is orthogonal to the direction that the stripe-shaped orientation restriction means extend. On both sides of each orientation restriction means, liquid crystal regions (domains) are formed in which the liquid crystal molecules **3a** fall in directions which are 180° apart. As the orientation restriction means, various orientation restriction means (domain restriction means) as disclosed in Japanese Laid-Open Patent Publication No. 11-242225 can be used.

The liquid crystal display panel **10A** shown in FIG. **16(a)** includes ribs (protrusions) **31** as the first orientation restriction means, and slits (portions where the electrically-conductive film is absent) **32** provided in the second electrode **2** as the second orientation restriction means. The ribs **31** and the slits **32** are each provided in a stripe shape (strip shape). The ribs **31** cause the liquid crystal molecules **3a** to be oriented substantially perpendicular to the side faces **31a** thereof, so that the liquid crystal molecules **3a** are oriented in a direction which is orthogonal to the extending direction of the ribs **31**. When a potential difference is created between the first electrode **1** and the second electrode **2,** each slit **32** generates an oblique field in the liquid crystal layer **3** near the edges of the slit **32,** thus causing the liquid crystal molecules **3a** to be oriented in a direction which is orthogonal to the extending direction of the slits **32**. The ribs **31** and the slits **32** are disposed parallel to one another, with a constant interval therebetween, so that a liquid crystal region (domain) is formed between every adjoining rib **31** and slit **32**.

The liquid crystal display panel **10B** shown in FIG. **16(b)** differs from the liquid crystal display panel **10A** of FIG. **16(a)** in that ribs (first ribs) **41** and ribs (second ribs) **42** are provided as the first orientation restriction means and the second orientation restriction means, respectively. The ribs **41** and the ribs **42** are disposed parallel to one another, with a constant interval therebetween, so that, by causing the liquid crystal molecules **3a** to be oriented substantially perpendicular to side faces **41a** of the ribs **41** and side faces **42a** of the ribs **42**, liquid crystal regions (domains) are formed therebetween.

The liquid crystal display panel **10C** shown in FIG. **16(c)** differs from the liquid crystal display panel **10A** of FIG. **16(a)** in that slits (first slits) **51** and slits (second slits) **52** are provided as the first orientation restriction means and the second orientation restriction means, respectively. When a potential difference is created between the first electrode **1** and the second electrode **2,** a slit **51** and a slit **52** generate an oblique field in the liquid crystal layer **3** near the edges of the slits **51** and **52,** thus causing the liquid crystal molecules **3a** to be oriented in a direction which is orthogonal to the extending direction of the slits **51** and **52**. The slits **51** and the slits **52** are disposed parallel to one another, with a constant interval therebetween, so that liquid crystal regions (domains) are formed therebetween.

As described above, as the first orientation restriction means and the second orientation restriction means, ribs or slits can be used in any arbitrary combination. The first electrode **1** and the second electrode **2** may be any electrodes that oppose each other via the liquid crystal layer **3**. Typically, one of them is a counter electrode, whereas the other is a pixel electrode. Hereinafter, a more specific construction will be described with respect to a case where the first electrode **1** is a counter electrode and the second electrode **2** is a pixel electrode, by taking as an example the liquid crystal display panel **10A,** which includes the ribs **31** as the first orientation restriction means and the slits **32** provided in the pixel electrode as the second orientation restriction means. When the construction of the liquid crystal display panel **10A** shown in FIG. **16(a)** is adopted, an advantage is obtained in that the increase in the production steps can be minimized. Providing slits in the pixel electrodes does not require any additional steps. On the other hand, as for the counter electrode, providing ribs will induce a smaller increase in the number of steps than providing slits. It will be appreciated that a construction in which only ribs are employed as the orientation restriction means, or a construction in which only slits are employed, may be adopted.

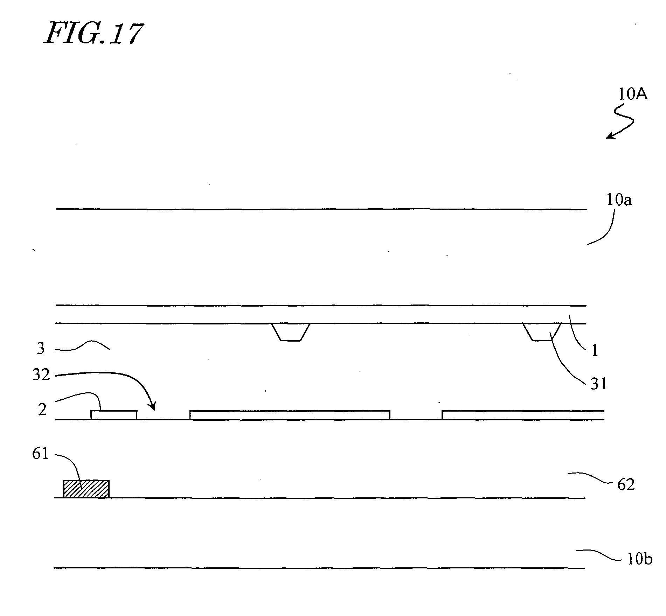

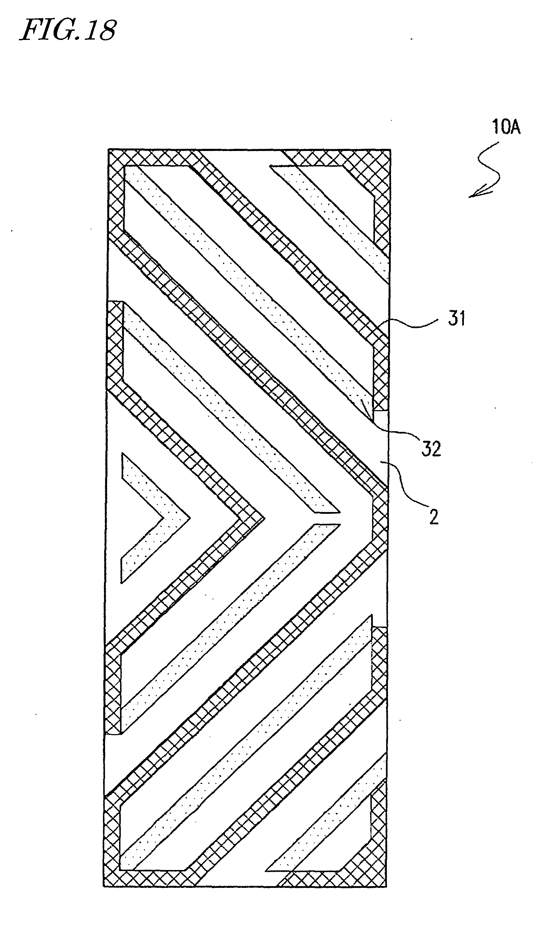

FIG. **17** is a partial cross-sectional view schematically showing a cross-sectional structure of the liquid crystal display panel **10A.** FIG. **18** is a plan view schematically showing a region corresponding to one subpixel of the liquid crystal display panel **10A.**

The liquid crystal display panel **10A** includes a first substrate (e.g., a glass substrate) **10a** and a second substrate (e.g., a glass substrate) **10b** opposing the first substrate **10a,** and a vertical-alignment type liquid crystal layer **3** provided between the first substrate **10a** and the second substrate **10b.** On the liquid crystal layer **3** side of the first substrate **10a,** the counter electrode **1** is formed, and the ribs **31** are formed further thereupon. A vertical alignment film (not shown) is formed on essentially the entire surface of the counter electrode **1** on the liquid crystal layer **3** side, including the ribs **31.** As shown in FIG. **18,** the ribs **31** extend in stripe shapes, and adjoining ribs **31** are disposed parallel to each other.

On the surface of the second substrate (e.g., glass substrate) **10b** on the liquid crystal layer **3** side, gate bus lines (scanning lines) and source bus lines (signal lines) **61** and TFTs (not shown) are provided, and an interlayer insulating film **62** covering them is formed. The pixel electrodes **2** are formed on the interlayer insulating film **62.** The pixel electrodes **2** and the counter electrode **1** oppose each other via the liquid crystal layer **3.**

Stripe-shaped slits **32** are formed in the pixel electrode **2,** and a vertical alignment film (not shown) is formed on essentially the entire surface of the pixel electrode **2,** including the slits **32.** The slits **32** extend in stripe shapes as shown in FIG. **18.** Every two adjoining slits **32** are disposed parallel to each other, so as to substantially bisect the interval between the adjoining ribs **31.**

Each region between the stripe-shaped ribs **31** and slits **32** extending in parallel to one another is restricted in terms of orientation direction by the rib **31** and slit **32** on both sides thereof. Thus, on both sides of each of the rib **31** and slit **32,** domains are formed in which liquid crystal molecules **3a** fall in directions which are 180° apart. In the liquid crystal display panel **10A,** as shown in FIG. **18,** ribs **31** and slits **32** extend in two directions which are 90° apart, so that, within each subpixel, four domains are formed, the orientation directions of whose liquid crystal molecules **3a** are 90° apart.

A pair of polarizers (not shown) which are provided on both sides of the first substrate **10a** and the second substrate **10b** are disposed so that their transmission axes are substantially orthogonal to each other (crossed-Nicols state). By placing the polarizers so that their transmission axes constitute 45° with reference to each orientation direction of all of the four domains whose orientation directions are 90° apart, change in retardation caused by the formation of the domains can be utilized most efficiently. Therefore, the polarizers are preferably disposed so that their transmission axes constitute substantially 45° with respect to the extending direction of the ribs **31** and slits **32.** Moreover, in the case of a display device for which the viewing direction is likely to be moved horizontally with respect to the display surface, e.g., a television set, it is preferable that the transmission axis of one of the pair of polarizers is in a horizontal direction with respect to the display surface, this being in order to suppress the viewing angle dependence of display quality.

In the liquid crystal display panel **10A** having the above-described construction, within each subpixel, a plurality of regions (domains) are formed whose liquid crystal molecules **3a** tilt in respectively different azimuth directions when a predetermined voltage is applied across the liquid crystal layer **3,** thus realizing displaying with a wide viewing angle. However, even in the liquid crystal display panel **10A** as such, if the luminance combination is randomly selected, a deviation of chromaticity (due to whitening) may occur when being viewed from an oblique direction. By performing the signal conversion which is conducted by the signal conversion circuit **20** of the present embodiment, a high quality displaying can be performed such that a deviation of chromaticity due to whitening is not likely to be visually recognized.

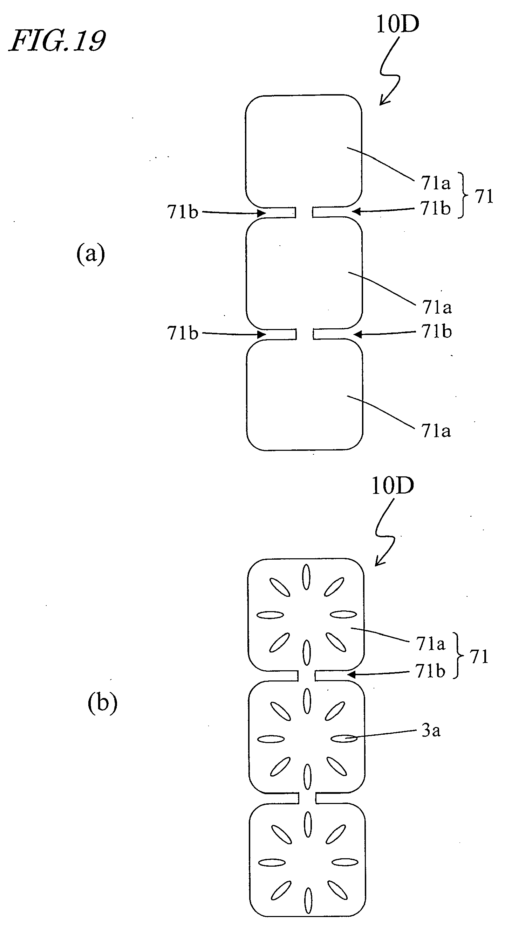

Next, an exemplary construction of the CPA-mode liquid crystal display panel **10** will be described with reference to FIG. **19.**

A pixel electrode **71** of a liquid crystal display panel **10D** shown in FIG. **19(a)** includes a plurality of recessed portions **71b** formed at predetermined positions, and is divided into a plurality of subpixel electrodes **71a** by the recessed portions **71b.** Each of the plurality of subpixel electrodes **71a** is substantially rectangular. Although an example is illustrated herein where the pixel electrode **71** is divided into three subpixel electrodes **71a,** the number of division is not limited thereto.

When a voltage is applied between the pixel electrode **71** having the aforementioned construction and a counter electrode (not shown), due to oblique fields which are generated near the outer edge of the pixel electrode **71** and in the recessed portions **71b,** a plurality of liquid crystal domains each exhibiting an axisymmetric orientation (radially-inclined orientation) are created, as shown in FIG. **19(b).** One liquid crystal domain is formed above each subpixel electrode **71a.** In each liquid crystal domain, the liquid crystal molecules **3a** tilt in essentially all azimuth directions. That is, in the liquid crystal display panel **10D,** numerous regions are formed whose liquid crystal molecules **3a** tilt in respectively different azimuth directions. Therefore, displaying with a wide viewing angle is realized. However, even in the liquid crystal display panel **10D** as such, if the luminance combination is randomly selected, a deviation of chromaticity (due to whitening) may occur when being viewed from an oblique direction. By performing the signal conversion which is conducted by the signal conversion circuit **20** of the present embodiment, a high quality displaying can be performed such that a deviation of chromaticity due to whitening is not likely to be visually recognized.

Although FIG. **19** illustrates the pixel electrode **71** with the recessed portions **71b** formed therein, apertures **71c** may be formed instead of the recessed portions **71b** as shown in FIG. **20.** The pixel electrode **71** shown in FIG. **20** has a plurality of apertures **71c,** and is divided into a plurality of subpixel electrodes **71a** by the apertures **71c.** When a voltage is applied between the pixel electrode **71** as such and a counter electrode (not shown), a plurality of liquid crystal domains each exhibiting an axisymmetric orientation (radially-inclined orientation) is created, due to oblique fields which are generated near the outer edge of the pixel electrode **71** and in the apertures **71c.**

FIG. **19** and FIG. **20** illustrate constructions where a plurality of recessed portions **71b** or apertures **71c** are provided in one pixel electrode **71.** In the case of dividing the pixel electrode **71** into halves, however, only one recessed portion **71b** or aperture **71c** may be provided. In other words, by providing at least one recessed portion **71b** or aperture **71c** in the pixel electrode **71,** a plurality of liquid crystal domains with axisymmetric orientations can be formed. As the shape of the pixel electrode **71,** various shapes as disclosed in Japanese Laid-Open Patent Publication No. 2003-43525, for example, may be used.

As a technique of reducing the viewing angle dependence of γ characteristics, a technique called multi-pixel driving is proposed in Japanese Laid-Open Patent Publication No. 2004-62146 and Japanese Laid-Open Patent Publication No. 2004-78157. Under this technique, one subpixel is divided into two regions, and a different voltage is applied to each region, whereby the viewing angle dependence of γ characteristics is reduced. The present invention may be used in combination with such multi-pixel driving.

## INDUSTRIAL APPLICABILITY

According to the present invention, a signal conversion circuit to be suitably used in a multiprimary liquid crystal display device is provided. In a multiprimary liquid crystal display device having the signal conversion circuit according to the present invention, a color deviation due to whitening when being observed from an oblique direction is suppressed, thus making it possible to perform display with a high quality. Thus, a multiprimary liquid crystal display device having the signal conversion circuit according to the present invention is suitably used in various electronic devices such as liquid crystal television sets.

## REFERENCE SIGNS LIST

| | |
|---|---|
| **10** | liquid crystal display panel |
| **20** | signal conversion circuit |
| **21** | color coordinate conversion section |
| **22** | look-up table memory |
| **23** | calculation section |
| **24** | interpolation section |
| **100** | liquid crystal display device |

## Claims

1. A signal conversion circuit for use in a multiprimary liquid crystal display device which performs display in a vertical alignment mode by using four or more primary colors, the signal conversion circuit converting an input video signal to a multiprimary signal corresponding to four or more primary colors, wherein
when generating a multiprimary signal for a pixel of the multiprimary liquid crystal display device to display dark skin according to the Macbeth chart, the signal conversion circuit applies a conversion to the video signal so that a color difference $\Delta u'v'=((u'-u_{60}')^2+(v'-v_{60}')^2)$ is 0.03 or less, the color difference $\Delta u'v'$ being defined by CIE1976 chromaticity coordinates (u', v') representing a chromaticity when the pixel is viewed from a frontal direction and CIE1976 chromaticity coordinates ($u_{60}'$, $v_{60}'$) representing a chromaticity when the pixel is viewed from a 60° oblique direction.

2. The signal conversion circuit of claim 1, wherein the signal conversion circuit applies a conversion to a video signal so that the color difference $\Delta u'v'$ is 0.008 or less when generating a multiprimary signal for the pixel of the multiprimary liquid crystal display device to display dark skin according to the Macbeth chart.

3. The signal conversion circuit of claim 1 or 2, wherein the signal conversion circuit applies a conversion to a video signal so that the color difference $\Delta u'v'$ is 0.01 or less when generating a multiprimary signal for the pixel of the multiprimary liquid crystal display device to display light skin according to the Macbeth chart.

4. A signal conversion circuit for use in a multiprimary liquid crystal display device which performs display in a vertical alignment mode by using four or more primary colors, the signal conversion circuit converting an input video signal to a multiprimary signal corresponding to four or more primary colors, wherein

when generating a multiprimary signal for a pixel of the multiprimary liquid crystal display device to display light skin according to the Macbeth chart, the signal conversion circuit applies a conversion to the video signal so that a color difference $\Delta u'v'=((u'-u_{60}')^2+(v'-v_{60}')^2)$ is 0.01 or less, the color difference $\Delta u'v'$ being defined by CIE1976 chromaticity coordinates (u', v') representing a chromaticity when the pixel is viewed from a frontal direction and CIE1976 chromaticity coordinates ($u_{60}'$, $v_{60}'$) representing a chromaticity when the pixel is viewed from a 60° oblique direction.

5. The signal conversion circuit of claim 3 or 4, wherein the signal conversion circuit applies a conversion to a video signal so that the color difference $\Delta u'v'$ is 0.008 or less when generating a multiprimary signal for the pixel of the multiprimary liquid crystal display device to display light skin according to the Macbeth chart.

6. The signal conversion circuit of any of claims 1 to 5, wherein, when there is a number n of primary colors to be used for displaying, the signal conversion circuit acquires luminances of (n-3) primary colors among the n primary colors by referring to a look-up table based on the input video signal, and calculates luminances of the remaining three primary colors among the n primary colors through a calculation using the luminances of the (n-3) primary colors.

7. The signal conversion circuit of claim 6, comprising:

   a look-up table memory for storing the look-up table; and
   a calculation section for performing the calculation.

8. A multiprimary liquid crystal display device comprising: the signal conversion circuit of any of claims 1 to 7; and a liquid crystal display panel to which the multiprimary signal generated by the signal conversion circuit is input.

9. The multiprimary liquid crystal display device of claim 8, wherein,
   the liquid crystal display panel includes a first substrate, a second substrate opposing the first substrate, a vertical-alignment type liquid crystal layer disposed between the first substrate and the second substrate, the liquid crystal display panel having a plurality of subpixels each displaying one of the four or more primary colors;
   each of the plurality of subpixels includes a first electrode provided on the liquid crystal layer side of the first substrate, and a second electrode being provided on the second substrate and opposing the first electrode via the liquid crystal layer; and
   in each of the plurality of subpixels, when a predetermined voltage is applied across the liquid crystal layer, a plurality of regions whose liquid crystal molecules tilt in respectively different azimuth directions are formed.

10. The multiprimary liquid crystal display device of claim 9, wherein
    the liquid crystal display panel includes:

    first orientation restriction means provided on the first electrode side of the liquid crystal layer; and
    second orientation restriction means provided on the second electrode side of the liquid crystal layer.

11. The multiprimary liquid crystal display device of claim 10, wherein the first orientation restriction means is a rib, and the second orientation restriction means is a slit provided in the second electrode.

12. The multiprimary liquid crystal display device of claim 10, wherein the first orientation restriction means is a first rib, and the second orientation restriction means is a second rib.

13. The multiprimary liquid crystal display device of claim 10, wherein the first orientation restriction means is a first slit provided in the first electrode, and the second orientation restriction means is a second slit provided in the second electrode.

14. The multiprimary liquid crystal display device of claim 9, wherein,
    the first electrode includes at least one aperture or recessed portion formed at a predetermined position; and
    in each of the plurality of subpixels, when a predetermined voltage is applied across the liquid crystal layer, a plurality of liquid crystal domains are formed each exhibiting an axisymmetric orientation.

*FIG.1*

RGB → [SIGNAL CONVERSION CIRCUIT] 20 → RGBYeC → [LIQUID CRYSTAL DISPLAY PANEL] 10

100

*FIG.2*

PIXEL

R | G | B | Ye | C

*FIG.3*

(a)

CHROMATICITY METER

100

60°

CHROMATICITY METER

POINT OF MEASUREMENT

100

(b)

4% WINDOW

(c)

100

90°

CHROMATICITY METER

*FIG.4*

*FIG.5*

*FIG.6*

FRONTAL DIRECTION LUMINANCE

*FIG.7*

*FIG.8*

*FIG.9*

FIG.10

FIG.11

## FIG.12

0.391

0.358

0.289

R
G
B
Ye
C

X          Y          Z

## FIG.13

0.428

0.392

0.316

R
G
B
Ye
C

X          Y          Z

## FIG.14

20

INPUT
Ri,Gi,Bi

21

COLOR COORDI-NATE CON-VERSION SECTION

Ri,Gi,Bi

22

Ri
255

Bi

0          255
Gi

Ye,C

23

XYZ

CALCULATION SECTION

R,G,B

*FIG.15*

20

INPUT
Ri,Gi,Bi

21
COLOR
COORDI-
NATE CON-
VERSION
SECTION

Ri,Gi,Bi

Ri
255

22

Bi

0          255
Gi

24
INTERPOLATION
SECTION

Ye,C

XYZ

23
CALCULATION
SECTION

R,G,B

## FIG.16

(a)

(b)

(c)

*FIG.17*

10A

10a

3

32

2

61

1

31

62

10b

*FIG.18*

*FIG.19*

10D

(a)

71b →          ← 71b } 71
71a }
71a

71b →          ← 71b
71a

10D

(b)

71a } 71
← 71b
3a

*FIG.20*

*FIG.21*

*FIG.22*

*FIG.23*

## INTERNATIONAL SEARCH REPORT

| International application No. |
|---|
| PCT/JP2009/002252 |

A. CLASSIFICATION OF SUBJECT MATTER
*G09G3/36*(2006.01)i, *G02F1/133*(2006.01)i, *G09G3/20*(2006.01)i

According to International Patent Classification (IPC) or to both national classification and IPC

B. FIELDS SEARCHED

Minimum documentation searched (classification system followed by classification symbols)
G09G3/00-5/40, G02F1/133

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2009 |
| Kokai Jitsuyo Shinan Koho | 1971-2009 | Toroku Jitsuyo Shinan Koho | 1994-2009 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2005-258404 A (Hitachi, Ltd.),<br>22 September, 2005 (22.09.05),<br>Par. Nos. [0079] to [0096]; Figs. 15 to 18<br>& US 2005/0231457 A1 & KR 10-2006-0041848 A<br>& CN 1655024 A | 1-8 |
| Y | WO 2006/126118 A2 (KONINKLIJKE PHILIPS ELECTRONICS N.V.),<br>30 November, 2006 (30.11.06),<br>Page 4, line 21 to page 13, line 9; Figs. 1 to 12<br>& JP 2008-542808 A & US 2008/0211973 A1<br>& EP 1889489 A & KR 10-2008-0031196 A<br>& CN 101180889 A | 1-8 |

[X] Further documents are listed in the continuation of Box C.　　[ ] See patent family annex.

| | |
|---|---|
| *　Special categories of cited documents:<br>"A"　document defining the general state of the art which is not considered　to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search<br>29 July, 2009 (29.07.09) | Date of mailing of the international search report<br>11 August, 2009 (11.08.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2009/002252

| C (Continuation). DOCUMENTS CONSIDERED TO BE RELEVANT | | |
|---|---|---|
| Category* | Citation of document, with indication, where appropriate, of the relevant passages | Relevant to claim No. |
| Y | WO 2007/132635 A1 (Sharp Corp.),<br>22 November, 2007 (22.11.07),<br>Par. Nos. [0096] to [0106]; Figs. 1 to 11<br>& JP 4241902 B          & EP 2023642 A1 | 2-3,5-7 |

Form PCT/ISA/210 (continuation of second sheet) (April 2007)

## INTERNATIONAL SEARCH REPORT

| International application No. |
| --- |
| PCT/JP2009/002252 |

---

**Box No. II    Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

---

**Box No. III    Observations where unity of invention is lacking (Continuation of item 3 of first sheet)**

This International Searching Authority found multiple inventions in this international application, as follows:

The technical feature of the invention of claims 1 - 8 relates to the conversion of picture signals inputted, into multiple primary color signals, and the technical feature of the invention of claims 9 - 14 relates to a structure of a liquid crystal display panel. These inventions cannot be considered so relative as to form a single general inventive concept, since they are not so technically related as to involve one or two or more of the same or corresponding special technical features.

Hence, this international patent application contains the following two inventions which do not comply with the requirement of unity of invention.
(continued to extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.    Consequently, this international search report is restricted to the invention first mentioned in the claims; it is covered by claims Nos.:
Claims 1 - 8.

**Remark on Protest**
the

☐ The additional search fees were accompanied by the applicant's protest and, where applicable, payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (April 2007)

**INTERNATIONAL SEARCH REPORT**

International application No.

PCT/JP2009/002252

Continuation of Box No.III of continuation of first sheet(2)

1: Claims 1 - 8
2: Claims 9 - 14

Form PCT/ISA/210 (extra sheet) (April 2007)

**EP 2 296 138 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004529396 W
- JP 63021907 A
- JP 11242225 A
- JP 2003043525 A
- JP 2004062146 A
- JP 2004078157 A

**Non-patent literature cited in the description**

- **M. R. Pointer.** The gamut of real surface colors. *Color Research and Application,* 1980, vol. 5 (3), 145-155